# EUROPÄISCHE PATENTSCHRIFT

(11) **EP 1 144 474 B1**
(45) Veröffentlichungstag und Bekanntmachung des Hinweises auf die Patenterteilung: **10.09.2003**
(21) Anmeldenummer: 99963426.4
(22) Anmeldetag: 08.12.1999
(51) Int. Cl.: C08G 18/62, C08G 18/70, C09D 175/04, C09D 5/34

(54) **WÄSSRIGE REAKTIVE SPACHTELMASSEN (I)**
AQUEOUS REACTIVE PUTTY (I)
MASTICS AQUEUX REACTIFS (I)

(30) Priorität: 21.12.1998 DE 19858817; 21.12.1998 DE 19858818
(43) Veröffentlichungstag der Anmeldung: 17.10.2001
(73) Patentinhaber: Bayer Aktiengesellschaft, 51368 Leverkusen (DE)
(72) Erfinder: BLUM, Harald, D-51375 Leverkusen (DE); CLEMENS, Horst, D-47802 Krefeld (DE); EHLERS, Michael, D-47829 Krefeld (DE); PROBST, Joachim, D-51375 Leverkusen (DE); WOLFF, Joachim, D-51519 Odenthal (DE); IRLE, Christoph, 41539 Dormagen (DE)
(86) Internationale Anmeldenummer: EP9909635
(87) Internationale Veröffentlichungsnummer: WO00037523

(56) Entgegenhaltungen:
- EP-A- 0 103 253
- EP-A- 0 358 979
- EP-A- 0 835 889
- DE-A- 19 733 166
- US-A- 4 948 443
- DATABASE WPI Section Ch, Week 198650 Derwent Publications Ltd., London, GB; Class A14, AN 1986-328440 XP002133724 & JP 61 243868 A (DAINIPPON INK & CHEM KK) , 30. Oktober 1986 (1986-10-30)
- DATABASE WPI Section Ch, Week 199504 Derwent Publications Ltd., London, GB; Class A25, AN 1995-027766 XP002133821 & JP 06 313106 A (MITSUI TOATSU CHEM INC), 8. November 1994 (1994-11-08)

## Beschreibung

Die Erfindung betrifft wässrige reaktive 2-Komponenten-Bindemittelkombinationen für wässrige reaktive Spachtelmassen, Verfahren zur Herstellung von wässrigen reaktiven Spachtelmassen auf Basis von wässrigen reaktiven 2-Komponenten-Bindemittelkombinationen und die Verwendung solcher Spachtelmassen.

Ungesättigte Polyesterharze als Bindemittel für Spachtelmassen sind seit langem bekannt. Solche Produkte enthalten jedoch größere Mengen reaktive, flüchtige Lösemittel, vorzugsweise Styrol, als copolymerisierbare Monomere. Es hat nicht an Versuchen gefehlt, Bindemittel auf Basis ungesättigter Polyester zu entwickeln, die so niedrige Viskosität besitzen, dass sie die für Spachtelmassen charakteristischen hohen Füllstoffmengen aufnehmen können und in Abwesenheit copolymerisierbarer Monomerer trotz niedriger Molekulargewichte mit Hilfe von Peroxiden zu klebfreien Spachtelmassen gehärtet werden können. Beispielhaft genannt sei hier die EP-A 154 924, in der Polyester auf Basis ungesättigter Dicarbonsäuren, Diolen und Allylether beansprucht werden, die ohne reaktive, flüchtige Lösemittel zu Spachtelmassen formuliert werden können. Aufgrund der für eine Reihe von Anwendungen zu geringen Reaktivität bzw. zu langsamer Aushärtung und aufgrund der aufwendigen Herstellung der Rohstoffe (hohes Rohstoffkostenniveau) konnten sich solche und ähnliche Systeme im Markt bisher nicht durchsetzen. Wässrige einkomponentige Spachtelmassen sind ebenfalls bekannt, solche Produkte weisen jedoch für viele Anwendungsbereiche nicht das erforderliche Eigenschaftsniveau auf.

In der EP-A 0 358 979 werden ebenfalls wässrige 2 Komponenten-Beschichtungsmittel beschrieben. Diese Systeme können jedoch nicht die für Spachtelmassen erforderliche hohen Füllstoffmengen aufnehmen.

Es besteht also nach wie vor die Aufgabe, Rohstoffe bzw. Bindemittelkombinationen für Spachtelmassen zur Verfügung zu stellen, die ohne Einsatz reaktiver, flüchtiger Lösemittel und unter Einsatz der für Spachtelmassen charakteristischen, hohen bis sehr Füllstoffmengen stabil formuliert und in praxisgerechten Zeiten zu qualitativ hochwertigen, auch in sehr dicken Schichten bis in den Zentimeterbereich anwendbaren, Spachtelmassen ausgehärtet werden können. Weitere wichtige Anforderungen an neue Bindemittelkombinationen für Spachtelmassen, sind eine schnelle Schleifbarkeit, eine für eine fachgerechte Verarbeitung unbedingt erforderliche spezielle Spachtelkonsistenz, eine hohe Härte bei gleichzeitig ausreichender Flexibilität, hohes Füllvermögen, eine gute Haftung auf verschiedenen Untergründen, sehr gute Überlackierbarkeit mit unterschiedlichen Lacksystemen und gute Beständigkeitseigenschaften.

Weitere wichtige Forderungen an moderne Spachtelmassen sind ein möglichst niedriger Gehalt flüchtiger organischer Substanzen (Umweltverträglichkeit), sowie eine hohe Variabilität (breite Verwendbarkeit), d.h. die Möglichkeit auf Basis geeigneter Bindemittelkombinationen durch Auswahl entsprechender Rohstoffe, Additive, Füllstoffe und Pigmente sowohl höchstreaktive Spachtelmassen, mit dann relativ kurzer Verarbeitungszeit, aber auch Spachtelmassen mit längerer Verarbeitungszeit und trotzdem guter Reaktivität formulieren zu können.

Überraschenderweise wurde jetzt gefunden, dass wässrige reaktive 2-Komponenten-Bindemittelkombinationen für wässrige reaktive Spachtelmassen, bestehend aus
a) mindestens einem in wässriger Dispersion bzw. Emulsion vorliegenden Copolymer und
b) mindestens einem, freie Isocyanatgruppen enthaltenden Polyisocyanat, in der Lage sind, die oben genannten Anforderungen zu erfüllen.

Die erfindungsgemäßen Bindemittelkombinationen und die daraus hergestellten Spachtelmassen enthalten nur geringe Mengen flüchtiger organischer Bestandteile und weisen eine große Variabilität in Bezug auf die Reaktivität auf. Außerdem ist es möglich, durch geeignete Rohstoffauswahl lichtechte Spachtelmassen herzustellen, die in den für Spachtelmassen üblichen Anwendungsbereichen praktisch keine Vergilbung oder Kreidung bzw. Verfärbung zeigen.

Gegenstand der Erfindung sind wässrige reaktive 2-Komponenten-Bindemittelkombinationen für wässrige reaktive Spachtelmassen, bestehend aus
a) mindestens einem, isocyanatreaktive Gruppen enthaltenden Emulsionscopolymerisat, bestehend aus
   a1) 50 bis 85 Gew.-% hartmachenden Monomeren, deren Homopolymerisat eine Glasübergangstemperatur von größer 0°C aufweist,
   a2) 5 bis 30 Gew.-% weichmachenden Monomeren, deren Homopolymerisat eine Glasübergangstemperatur von kleiner 0°C aufweist,
   a3) 2 bis 30 Gew.-% hydroxyfunktionellen Monomeren,
   a4) 1 bis 4 Gew.-% carboxyl- und/oder carboxylatfunktionellen Monomeren und
b) mindestens einem, freie Isocyanatgruppen enthaltenden Polyisocyanat mit einer Viskosität von 10 bis 10 000 mPas/23°C und einer Funktionalität von 2,4 bis 5,5,

wobei die Summe der %- Zahlen a1) bis a5) 100 beträgt.

Die erfindungsgemäßen wässrigen reaktiven Spachtelmassen bestehen aus
a) mindestens einem in wässriger Dispersion bzw. Emulsion vorliegenden Co-polymerisat,
b) mindestens einem, freie Isocyanatgruppen enthaltendem Polyisocyanat mit einer Viskosität von 10 bis 20 000 mPas/23°C und einer Funktionalität von 1,5 bis 7,5,
c) mindestens einem Pigment und/oder Füllstoff,
d) gegebenenfalls Hilfs- und Zusatzmittel,
e) gegebenenfalls weiteren in Form wässriger Lösung, Dispersion bzw. Emulsion vorliegenden Oligomeren bzw. Polymeren und
f) gegebenenfalls Wasser und/oder organischem Lösemittel,

wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:1,3 bis 1:20 beträgt.

Gegenstand der Erfindung sind auch wässrige reaktive Spachtelmassen, bestehend aus
a) 10 bis 50 Gew.-% mindestens eines Emulsionscopolymerisats,
b) 1 bis 15 Gew.-% mindestens eines, freie Isocyanatgruppen enthaltenden Poly-isocyanats mit einer Viskosität von 10 bis 20 000 mPas/23°C und einer Funktionalität von 2 bis 6,
c) 40 bis 90 Gew.-% mindestens eines Pigment und/oder Füllstoffes,
d) 0 bis 3 Gew.-% Hilfsmittel, Zusatzmittel und/oder Additive,
e) 0 bis 50 Gew.-% weitere, gegebenenfalls in Form wässriger Lösung, Dispersion bzw. Emulsion vorliegende Oligomere bzw. Polymere und
f) 0 bis 20 Gew.-% Wasser und/oder organische Lösemittel,

wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:1,5 bis 1:15 beträgt.

Gegenstand der Erfindung sind auch bevorzugtwässrige reaktive Spachtelmassen, bestehend aus
a) 10 bis 50 Gew.-% mindestens eines Emulsionscopolymerisats, einpolymerisiert enthaltend
   a1) 35 bis 95 Gew.-% hartmachende Monomere,
   a2) 0 bis 50 Gew.-% weichmachende Monomere,
   a3) 0 bis 50 Gew.-% hydroxyfunktionelle Monomere,
   a4) 0 bis 6 Gew.-% säurefunktionelle Monomere, welche gegebenenfalls anteilig oder ganz in neutralisierter Form vorliegen können
   a5) 0 bis 25 Gew.-% sonstige Monomere und
b) 1 bis 9,8 Gew.-% mindestens eines, freie Isocyanatgruppen enthaltenden Polyisocyanats mit einer Viskosität von 10 bis 20 000 mPas/23°C und einer Funktionalität von 2 bis 6,
c) 40 bis 90 Gew.-% mindestens eines Pigment und/oder Füllstoffes,
d) 0 bis 3 Gew.-% Hilfsmittel, Zusatzmittel und/oder Additive,
e) 0 bis 50 Gew.-% weitere, gegebenenfalls in Form wässriger Lösung, Dispersion bzw. Emulsion vorliegende Oligomere bzw. Polymere und
f) 0 bis 20 Gew.-% Wasser und/oder organische Lösemittel,

wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:1,5 bis 1:15 beträgt.

Gegenstand der Erfindung sind auch besonders bevorzugt wässrige reaktive Spachtelmassen, bestehend aus
a) 10 bis 50 Gew.-% mindestens eines Emulsionscopolymerisats des Molekulargewichtes > 25 000 g/Mol, einpolymerisiert enthaltend
   a1) 40 bis 90 Gew.-% hartmachende Monomere,
   a2) 0 bis 35 Gew.-% weichmachende Monomere,
   a3) 0 bis 29,5 Gew.-% hydroxyfunktionelle Monomere,
   a4) 0,5 bis 5 Gew.-% carboxyl- und/oder carboxylatfunktionelle Monomere,
   a5) 0 bis 15 Gew.-% sonstigen Monomeren und 1 bis 9,8 Gew.-% mindestens eines, freie Isocyanatgruppen enthaltenden Polyisocyanats mit einer Viskosität von 10 bis 20 000 mPas/ 23°C und einer Funktionalität von 2 bis 6,
b) 40 bis 90 Gew.-% mindestens eines Pigment und/oder Füllstoffes,
c) 0 bis 3 Gew.-% Hilfsmittel, Zusatzmittel und/oder Additive,
d) 0 bis 50 Gew.-% weitere, gegebenenfalls in Form wässriger Lösung, Dispersion bzw. Emulsion vorliegende Oligomere bzw. Polymere und
e) 0 bis 20 Gew.-% Wasser und/oder organische Lösemittel,

wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:1,5 bis 1:15 beträgt.

Gegenstand der Erfindung sind auch ganz besonders bevorzugt wässrige reaktive Spachtelmassen, bestehend aus
a) 10 bis 50 Gew.-% mindestens eines, isocyanatreaktive Gruppen enthaltenden Emulsionscopolymerisats des Molekulargewichtes > 50 000 g/Mol, einpolymerisiert enthaltend
   a1) 50 bis 85 Gew.-% hartmachende Monomere,
   a2) 5 bis 30 Gew.-% weich machende Monomere,
   a3) 2 bis 30 Gew.-% hydroxyfunktionelle Monomere,
   a4) 1 bis 4 Gew.-% carboxyl- und/odercarboxylatfunktionelle Monomere und
b) 1 bis 9,8 Gew.-% mindestens eines, freie Isocyanatgruppen enthaltenden Polyisocyanats mit einer Viskosität von 10 bis 20 000 mPas/23°C und einer Funktionalität von 2,4 bis 5,5,
c) 40 bis 90 Gew.-% mindestens eines Pigment und/oder Füllstoffes,
d) 0 bis 3 Gew.-% Hilfsmittel, Zusatzmittel und/oder Additive,
e) 0 bis 50 Gew.-% weitere, gegebenenfalls in Form wässriger Lösung, Dispersion bzw. Emulsion vorliegende Oligomere bzw. Polymere und
f) 0 bis 20 Gew.-% Wasser und/oder organische Lösemittel,

wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:1,5 bis 1:15 beträgt.

Gegenstand der Erfindung sind weiterhin ganz besonders bevorzugtwässrige Spachtelmassen, bestehend aus
a) 22 bis 38 Gew.-% mindestens eines, isocyanatreaktive Gruppen enthaltenden Emulsionscopolymerisats des Molekulargewichtes > 50 000 g/Mol,
b) 1 bis 7,5 Gew.-% mindestens eines, freie Isocyanatgruppen enthaltenden Polyisocyanats mit einer Viskosität von 10 bis 10 000 mPas/23°C und einer Funktionalität von 2,4 bis 5,5,
c) 53 bis 75 Gew.-% mindestens eines Pigment und/oder Füllstoffes,
d) 0 bis 2 Gew.-% Hilfsmittel, Zusatzmittel und/oder Additive,
e) 0 bis 20 Gew.-% weitere, gegebenenfalls in Form wässriger Lösung, Dispersion bzw. Emulsion vorliegende Oligomere bzw. Polymere und
f) 0 bis 10 Gew.-% Wasser und/oder organische Lösemittel,

wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:2,1 bis 1:10 beträgt.

Gegenstand der Erfindung ist auch ein Verfahren zur Herstellung von reaktiven Spachtelmassen, dadurch gekennzeichnet, dass zunächst aus mindestens einem als Dispersion bzw. Emulsion vorliegenden Polymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/ oder Wasser f) in einem geeigneten technischen Apparat eine Komponente, die mindestens 85 Gew.-% der erfindungsgemäßen Spachtelmasse ausmacht, mit der für eine praxisgerechte Verarbeitung erforderlichen Konsistenz hergestellt wird, und diese dann direkt vor der Anwendung mit der zweiten Komponente, die bis zu 15 Gew.-% der erfindungsgemäßen Spachtelmasse ausmacht, nämlich mindestens einem Polyisocyanatvernetzer b), zu der erfindungsgemäßen Spachtelmasse homogen vermischt wird.

Gegenstand der Erfindung ist auch ein Verfahren zur Herstellung von reaktiven Spachtelmassen, dadurch gekennzeichnet, dass zunächst aus mindestens einem, isocyanatreaktive Gruppen enthaltenden Emulsionscopolymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/oder Wasser f) in einem geeigneten technischen Apparat eine Komponente, die 90,2 bis 99 Gew.-% der erfindungsgemäßen Spachtelmasse ausmacht, mit der für eine praxisgerechte Verarbeitung erforderlichen Konsistenz hergestellt wird, und diese dann direkt vor der Anwendung mit der zweiten Komponente, die 9,8 bis 1 Gew.-% der erfindungsgemäßen Spachtelmasse ausmacht, nämlich mindestens einem Polyisocyanatvemetzer b), zu der erfindungsgemäßen Spachtelmasse homogen vermischt wird.

Gegenstand der Erfindung ist auch ein Verfahren zur Herstellung von reaktiven Spachtelmassen, dadurch gekennzeichnet, dass zunächst aus mindestens einem als Dispersion bzw. Emulsion vorliegenden Copolymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) gegebenenfalls bis zu 10 Gew.-% bezogen auf Gesamtfeststoffgehalt organischem Lösemittel und/oder Wasser f) und mindestens einem Polyisocyanatvemetzer b) die erfindungsgemäße Spachtelmasse in einem geeigneten technischen Apparat, unmittelbar vor der Verarbeitung der Spachtelmasse, hergestellt wird, und diese dann gegebenenfalls durch Zugabe von Wasser und/oder organischem Lösemittel auf die erforderliche Verarbeitungskonsistenz eingestellt wird.

Gegenstand der Erfindung ist auch die Verwendung der erfindungsgemäßen reaktiven 2-Komponenten-Bindemittelkombinationen in oder als wässrige reaktive Spachtelmassen.

Gegenstand der Erfindung ist auch die Verwendung der erfindungsgemäßen reaktiven 2-Komponenten-Bindemittelkombinationen in oder als wässrige reaktive Spachtelmassen für Holz, holzartige Untergründe und/oder Kork.

Gegenstand der Erfindung ist auch die Verwendung der erfindungsgemäßen reaktiven 2-Komponenten-Bindemittelkombinationen in oder als wässrige reaktive Spachtelmassen für metallische Untergründe, Fahrzeugkarosserien und/oder Kunststoffe.

Gegenstand der Erfindung ist auch die Verwendung der erfindungsgemäßen reaktiven 2-Komponenten-Bindemittelkombinationen in oder als wässrige reaktive Spachtelmassen für Marmor, Granit bzw. mineralische Untergründe.

Geeignete, in Dispersion bzw. Emulsion vorliegenden Polymere a) können z.B.sein Polyacrylat-Dispersionen bzw.-Emulsionen, Vinylaromaten enthaltende Polyacrylat-Dispersionen bzw.- Emulsionen, Vinylester-, Vinylether-, Vinylchlorid-Dispersionen bzw. -Emulsionen, Polyacrylat-Polyester-Dispersionen bzw.-Emulsionen, Polyacrylat-Polyurethan-Dispersionen bzw.-Emulsionen, styrolhaltige Emulsionen bzw. Dispersionen, Polymerisat-Polyepoxid-Dispersionen, Dispersionen auf Basis von gegebenenfalls hydrophilierten Polyolefinen, Poloymerisat-Polyamid-Dispersionen, Polymerisat-Aminoharz-Dispersionen, Cellulose- bzw Cellulosederivate enthaltende Dispersionen bzw. Emulsionen, fluorhaltige wässrige Dispersionen bzw. Emulsionen, Alkoxysilan- bzw. Silicongruppen enthaltende Dispersionen bzw. Emulsionen, sowie Mischungen der genannten und auch anderer Dispersionen.

Geeignete isocyanatreaktive Gruppen können z.B. sein Hydroxyl-, Amino-, Thio-, Epoxy-, Ketimin-, Aldimin-, Anhydrid-, Oxazolidin-, Amid-, Lactam-, sekundäre Aminfunktionen aufweisende Asparaginsäureestergruppen, Phenol- und Carboxyl bzw. CarboxylatGruppen.

Vorzugsweise enthalten die Polymere a) als isocyanatreaktive Gruppen Hydroxylgruppen und/oder Carboxylgruppen, wobei letztgenannte Gruppen auch teilweise oder ganz in neutralisierter Form vorliegen können. Es können auch Polymere ohne Hydroxylgruppen eingesetzt werden.

Bevorzugte Polymere a) sind Polyacrylat-Dispersionen, Polyacrylat-Emulsionen, styrolhaltige Polyacrylat-Dispersionen bzw. -Emulsionen, Polyacrylat-Polyurethan-Dispersionen bzw. -Emulsionen, Vinylether- bzw. Vinylester-Emulsionen, Polyacrylat-Polyester-Dispersionen bzw. Emulsionen.

Ganz besonders bevorzugt sind nach dem Verfahren der Emulsionscopolymerisation hergestellte Copolymere a), die mindestens 75, vorzugsweise 100 Gew.-% Acrylsäureester und/oder Methacrylsäureester und/oder Vinylaromaten einpolymerisiert enthalten. Andere copolymerisierbare Monomere, Oligomere oder Polymere, die bis zu 25 Gew.-% enthalten sein können, sind z.B. Maleinsäuremono- bzw. -bisester, Vinylester, Vinylether, Allylether, Allylester, Olefine, Diolefine, Polyolefine. Die hier genannten Monomere bzw. Oligomere bzw. Polymere sollen die Mitverwendung anderer, nicht genannter copolymerisierbarer Monomere, Oligomere bzw. Polymere nicht ausschließen.

Bei der Herstellung der Emulsionscopolymerisate a) mitverwendet werden können auch Monomere bzw. Oligomere bzw. Polymere mit mehr als einer copolymerisierbaren Doppelbindung.

Die Herstellung der Polymerisatharze a) erfolgt nach an sich bekannten Methoden der radikalischen Polymerisation, z.B. der Lösungspolymerisation, der Emulsionspolymerisation und der Suspensionspolymerisation. Bevorzugt ist das Verfahren der radikalischen Emulsionspolymerisation im wässrigen Milieu. Möglich sind kontinuierliche und diskontinuierliche Polymerisationsverfahren. Von den möglichen diskontinuierlichen Verfahren sind Zulaufverfahren besonders bevorzugt. Dabei wird Wasser, gegebenenfalls zusammen mit Teilen oder der Gesamtmenge an Emulgator bzw. oberflächenaktiver Substanz, sowie gegebenenfalls mit Teilen der Monomeren und/oder von Polymeren, sowie gegebenenfalls von Teilen des Initiators bzw. des Initiatorgemisches vorgelegt und auf Reaktionstemperatur erwärmt. Dann werden die Monomeren bzw. die restlichen Monomeren sowie der Initiator bzw. das Initiatorgemisch bzw. Teile des Initiators bzw. des Initiatorgemisches, gegebenfalls zusammen mit Teilen des Emulgators bzw. der oberflächenaktiven Substanz, zudosiert. Falls erforderlich kann nach der beendeten Zugabe der Monomeren nochmals eine geringe Initiatormenge nachgesetzt werden, um in der Nachreaktionsphase den gewünschten, sehr hohen Monomerumsatz sicher zu erreichen.

Die Emulsionpolymerisation kann nach einem einstufigen oder nach einem mehrstufigen Polymerisationsverfahren durchgeführt werden, wobei bei mehrstufigen Verfahren in jeder Stufe gleiche oder verschiedene Monomermischungen in gleichoder verschieden großen Mengen sowie gleiche oder verschiedene Initiatoren und/oder Emulgatoren, bzw. Initiator- und/oder Emulgatorkonzentrationen eingesetzt werden können. Mit einem mehrstufigen Polymerisationsverfahren können z.B. Kern-Schale-Morphologien, z.B. mit hartem Kern und weicher Schale bzw. umgekehrt oder unterschiedlichen Gehalten an isocyanatreaktiven Gruppen in Kern und Schale hergestellt werden. Bei mehrstufiger Fahrweise mit Kern-Schale-Morphologie beträgt der Anteil des Kerns 20 bis 80, vorzugsweise 35 bis 65 Gew.-% bezogen auf Gesamtfeststoffgehalt der Emulsion.

Durch diese Vorgehensweise ist es überraschenderweise möglich, fürdieAnwendungen in den erfindungsgemäßen wässrigen reaktiven Spachtelmassen ein spezielles Eigenschaflsniveau einzustellen. Insbesondere ist es möglich, Spachtelmassen zu erhalten, die eine besonders schnelle Schleifbarkeit und ein verbesserte Trocknung, insbesondere eine verbesserte Antrocknung (Trocknungsverhalten direkt nach der Applikation) aufweisen.

In einer bevorzugten Ausführungsform der erfindungsgemäßen wässrigen reaktiven Spachtelmassen sind deshalb nach einem zweistufigen Verfahren hergestellte Emulsionscopolymerisate mit Kern-Schale-Struktur enthalten, wobei der Anteil des Kerns 20 bis 80, vorzugsweise 35 bis 65 Gew.-% beträgt, und wobei in Kern bzw. Schale unterschiedliche prozentuale Anteile an isocyanatreaktiven Monomeren und/oder weichmachenden Monomeren enthalten sind und diese Unterschiede mindestens 100 Gew.-% betragen, wobei Monomere auch ausschließlich im Kern oder ausschließlich in der Schale in einpolymerisierter Form enthalten sein können.

Besonders bevorzugt ist ein Aufbau derart, dass der Polymeranteil des Kerns eine niedrigere Glasübergangstemperatur als der Polymeranteil der Schale aufweist, und in der Schale die Menge an isocyanatreaktiven Gruppen mindestens doppelt so hoch wie im Kern ist.

Die Emulsionspolymerisate können auch in Gegenwart von polymeren Emulgatoren, von anderen Polymerdispersionen , wie z.B. Polyurethan-Dispersionen hergestellt werden. Dabei kann, gegebenenfalls zusammen mit Emulgatoren, beispielsweise eine Menge von 0 bis 50%, bezogen auf den gesamten Festkörpergehalt des Endproduktes, einer Polyurethan-Dispersion vorgelegt werden, und in deren Gegenwart eine Emulsionspolymerisation wie oben beschrieben durchgeführt werden. Anstelle in Gegenwart einer Polyurethan-Dispersion kann die Emulsionspolymerisation auch in Gegenwart anderer in Wasser dispergiert bzw. gelöst vorliegender Polymerer wie z.B. Polyacrylat-Sekundärdispersionen, Polyacrylat-Emulsionspolymerisaten, Vinylaromaten-, Vinylester-, Olefine-, Vinylether-haltige Dispersionen, Polyurethan-Polyharnstoff-Dispersionen, Polyester-Dispersionen bzw. -Lösungen durchgeführt werden.

Geeignete Initiatoren können wasserlösliche oder wasserunlösliche radikalbildende Substanzen bzw. Substanzgemische sein, die in Mengen von 0,025 bis 3, vorzugsweise von 0,1 bis 0,75 besonders bevorzugt von 0,15 bis 0,45 Gew.-% bezogen auf eingesetzte Monomerenmenge eingesetzt werden. Geeignete Initiatoren sind z.B. Wasserstoffperoxid, Benzoylperoxid, Cumolhydroperoxid, Dibenzylperoxydicarbonat, Di-tert. -Butylperoxid, tert.-Butylhydroperoxid, tert.-Butyl- peroctoat, Ammoniumperoxodisulfat, Natriumperoxodisulfat, Kaliumperoxodisulfat, Azoisobuttersäuredinitril, Dibenzoylperoxid, tert.-Butylperpivalat, tert.-Butylperbenzoat. Bei Redoxsystemen werden zusätzlich Reduktionsmittel wie z.B. Isoascorbinsäure, Ascorbinsäure, Natriumbisulfit, Salze der Hydroxymethansulfinsäure, Formamidinsulfinsäure (RongalitC), gegebenenfalls auch in Kombination mit Eisen-li-sulfat und EDTA (Trilon B) eingesetzt. Damit können Polymerisationsreaktionen auch bei niedrigeren Temperaturen durchgeführt werden.

Die Polymerisation wird üblicherweise bei Temperaturen von 30 bis 95°C, vorzugsweise bei 45 bis 85°C durchgeführt.

Zur Regelung des Molekulargewichtes der Polymeren können übliche Regler eingesetzt werden, wie z.B. n- bzw. tert.-Dodecylmercaptan. Die Mitverwendung solcher Substanzen ist jedoch nicht bevorzugt. Bevorzugt eingesetzte Polymere a) enthalten keine solchen Substanzen.

Die Teilchengröße kann z.B. durch die eingesetzte Menge an Emulgator, Emulgatormischungen bzw. oberflächenaktiven Substanzen beeinflußt werden. Emulgatoren werden in Mengen von 0,25 bis 7,0, vorzugsweise von 0,5 bis 3,0, ganz besonders bevorzugtvon 1,0 bis 2,0 Gew.-% eingesetzt. Die mittlereTeilchengröße der Emulsion liegt zwischen 10 und 600, vorzugsweise zwischen 30 und 180 Nanometer, wobei in der Emulsion auch Teilchen unterschiedlicher Größen enthalten sein können.

Die eingesetzten Emulgatoren bzw. oberflächenaktiven Substanzen enthalten vorzugsweise anionische und/oder nichtionische Sruktureinheiten. Anionische Emulgatoren können niedermolekulare, definierte Substanzen aber auch oligomere bzw. polymere Substanzen bzw. Substanzgemische sein, die als anionische Gruppe z.B. Sulphonat-, Sulphat-, Carboxylat-, Phosphat- bzw. Phosphonatgruppen enthalten. Gut geeignete Emulgatoren sind z.B. solche, die aus langkettigen Alkyl- bzw. Arylresten und einer an eine Hydroxylgruppe gebundenen, hydrophilen Polyetherkette auf Basis von Ethylenoxid oder von Ethylenoxid/Propylenoxid bestehen und zusätzlich eine Sulphonat-, Sulphat-, Phosphonat- oder Phosphatgruppe enthalten. Zur Überführung der Säuregruppen in Salzgruppen sind Ammoniak, Amine oder Natrium bzw. Kalium geeignet. Geeignete nichtionische Emulgatoren, die vorzugsweise in Kombination mit ionischen Emulgatoren eingesetzt werden, sind z.B. ethoxylierte bzw. ethoxylierte/ propoxylierte Fettsäuren, ethoxylierte bzw. ethoxylierte/ propoxylierteAlkylphenole, ethoxylierte bzw. ethoxylierte/propoxylierte langkettige Alkohole wie z.B. Stearylalkohol, Oleylalkohol, Laurylalkohol, ethoxylierte bzw. ethoxylierte/propoxylierte langkettige Amine wie z.B. Stearylamin, ethoxylierte bzw. ethoxylierte/propoxylierte Abietinsäure.

Gegebenenfalls können auch weitere oberflächenaktive Substanzen wie z.B Polyvinylalkohole, Polyvinylpyrrolidon, Polyarylsäuresalze mitverwendet werden.

Die Mitverwendung von geringen Mengen organischer Lösemittel wie z.B. Butylglykol, Xylol Toluol, Methoxypropylacetat, Methylisobutylketon, Methoxypropanol, Butylglykolacetat oder N-Methylpyrrolidon ist möglich. Vorzugsweise werden die erfindungsgemäßen Copolymere jedoch ohne den Einsatz organischer Lösemittel hergestellt, so dass die Emulsionen keineflüchtigen organische Substanzen enthalten, außer den gegebenenfalls zugesetzten Neutralisationsaminen.

Geeignete hartmachende Monomere a1) zur Herstellung der erfindungsgemäßen Emulsionspolymerisate für Spachtelmassen können z.B. sein: Methacrylsäureester C1- bis C6- Alkylseitenketten bzw. cycloaliphatischen bzw. aromatischen Seitengruppen wie z.B. Methylmethacrylat, Ethylmethacrylat, n-Propylmethacrylat, iso-Propylmethacrylat, n-Butylmethacrylat, iso-Butylmethacrylat, tert.-Butylmethacrylat, n-Pentylmethacrylat, iso-Pentylmethacrylat, n-Hexylmethacrylat, Cyclohexylmethacrylat, Norbornylmethacrylat, Isobomylmethacrylat, Phenylmethacrylat, Vinylaromaten wie z.B. Styrol, a-Methylstyrol, Vinyltoluol, außerdem Acrylnitril, Methacrylnitril, Maleinsäuredimethylester, Maleinsäurediethylester und Mischungen der genannten, gegebenenfalls auch mit anderen hartmachenden Monomeren.

Bevorzugt verwendete Monomere a1) sind Methylmethacrylat, n-Butylmethacrylat und Styrol bzw. deren Mischungen.

Vorzugsweise enthalten die zur Herstellung der erfindungsgemäßen Spachtelmassen eingesetzten Emulsionscopolymerisate mindestens 40, besonders bevorzugt mindestens 55 Gew.-% Styrol bezogen auf die eingesetzte Gesamtmonomermenge a1) bis a5) in einpolymerisierter Form.

Überraschenderweise wurde gefunden, das solchermaßen hergestellte Spachtelmassen sich durch eine besonders hohe Härte und eine besonders schnelle Trocknung und Schleifbarkeit auszeichnen. Dies ist insofern überraschend, weil Polymerisate auf Basis von gleichen Mengen z.B. Methylmethacrylat, die absolut vergleichbare Molekulargewichte und rechnerisch ermittelbare vergleichbare Glasübergangstemperaturen aufweisen und bei Vergleich der Trocknung der reinen Emulsionspolymerisate eine gleichschnelle Trocknung aufweisen, zwar ebenfalls gut zur Herstellung von Spachtelmassen geeignet sind, in Bezug auf Härte, schnelle Trocknung und schnelle Schleifbarkeit den Produkten auf Basis von Styrol jedoch unterlegen sind.

GeeigneteweichmachendeMonomerea2)zur Herstellung der erfindungsgemäßen Emulsionscopolymerisate für Spachtelmassen können z.B. sein: Acrylsäureester wie Methylacrylat, Ethylacrylat, n-Propylacrylat, iso-Propylacrylat, n-Butyl-acrylat, iso-Butylacrylat, tert.-Butylacrylat, n-Pentylacrylat, iso-Pentylacrylat, n-Hexylacrylat, Cyclohexylacrylat, n-Heptylacylat, Nonylacrylat, n-Octylacrylat, 2-Ethylhexylacrylat, Decylacrylat, iso-Decylacrylat, Dodecylacrylat, Laurylacrylat, Stearylacrylat, Norbornylacrylat, Methoxypolypropylenglykolacrylat, Methoxypolyethylenglykolacrylat, Isobornylacrylat, Oleylacrylat, Palmitylacrylat, Methacrylsäureester mit C₇- bis C₂₂-Alkylseitenketten wie n-Heptylmethacrylat, Nonylmethacrylat, n-Octylmethacrylat, 2-Ethylhexylmethacrylat, Decylmethacrylat, iso-Decylmethacrylat, Dodecylmethacrylat, Laurylmethacrylat, Stearylmethacrylat, Methoxypolyethylenglykolmethacrylat, Methoxypolypropylenglykolmethacrylat, Oleylmethacrylat, Palmitylmethacrylat, außerdem Maleinsäuredi-n-butylester und Mischungen der genannten, gegebenenfalls auch mit anderen weichmachenden Monomeren.

Vorzugsweise verwendete Monomere a2) sind n-Butylacrylat, 2-Ethylhexylacrylat; Ethylacrylat, 2-Ethylhexylmethacrylat.

Als weichmachende Monomere werden dabei im wesentlichen solche bezeichnet, die zu Homopolymerisaten mit einer Glasübergangstemperatur von kleiner 0°C führen. Als hartmachende Monomere werden dabei im wesentlichen solche bezeichnet, deren Homopolymerisate Glasübergangstemperaturen von größer 0°C aufweisen.

Geeignete hydroxyfunktionelle Monomere a3) zur Herstellung der erfindungsgemäßen Emulsionscopolymerisate für Spachtelmassen können z.B. sein: Hydroxyfunktionelle Acrylsäure- bzw. Methacrylsäureester wie Hydroxyethylacrylat, Hydroxyethylmethacrylat, Hydroxypropylacrylat, Hydroxypropylmethacrylat, Hydroxybutylacrylat, Hydroxybutylmethacrylat; Polypropylenglykolmonoacrylat, Polypropylenglykolmonomethacrylat, Polyethylenglykolmonoacrylat, Polyethylenglykolmonomethacrylat, Polyethylenglykol-Polypropylenglykolmonomethacrylat, Polyethylenglykol-Polypropylenglykol-monoacrylat, Umsetzungsprodukte aus Methacrylsäure bzw. Acrylsäure und Cardura E10 (Glycidylester der Versaticsäure), Umsetzungsprodukte der genannten und auch anderer hydroxyfunktioneller copolymerisierbarer Monomerer mit e-Caprolacton und Mischungen der genannten, auch mit anderen hydroxyfunktionellen Monomeren.

Der Hydroxylgruppengehalt der Polymerisate a) beträgt 0 bis 8, vorzugsweise 0 bis 5, besonders bevorzugt 0,2 bis 3,5 Gew.-%.

Geeignete säurefunktionelle Monomere a4) zur Herstellung der erfindungsgemäßen Emulsionscopolymerisate für Spachtelmassen können z.B. sein: Acrylsäure, Methacrylsäure, Maleinsäure, Maleinsäureanhydrid, Fumarsäure, Crotonsäure, Maleinsäuremonoalkylester, Fumarsäuremonoalkylester, Itaconsäure, Propylacrylsäure.

In dem Begriff säurefunktionelle Monomere sollen auch Monomere mit Säureanhydridgruppen, bzw. mit blockierten Säuregruppen bzw. mit potentiellen Säuregruppen enthalten sein.

Vorzugsweise verwendete Monomeren a4) sind carboxylfunktionelle Monomere, insbesondere Acrylsäure oder Methacrylsäure.

Säure-, insbesondere Carboxylgruppen in den zur Herstellung der erfindungsgemäßen Spachtelmassen eingesetzten Emulsionscopolymerisate können vor, während oder bevorzugt nach der Polymerisation ganz oder teilweise in Salzgruppen überführt werden. Dafür geeignete Neutralisationsmittel sind z.B. Ammoniak, Triethylamin, Dimethylethanolamin, N-Methylmorpholin, Dimethylisopropylamin, N-Methyldiethanolamin, Triethanolamin, Aminomethyl-1-propanol, Dimethylisopropanolamin, Natronlauge, Kalilauge. Bevorzugt ist die Verwendung von Ammoniak, Triethylamin, N-Methylmorpholin und Dimethylisopropylamin. Bevorzugter Neutralisationsgrad ist 20 bis 110 %, besonders bevorzugt 35 bis 75 %, d.h. in diesem Fall verbleiben 25 bis 70 % der eingebauten Säuregruppen als nichtneutralisierte Säure im Polymer.

Bei Mengen bis 1,5 Gew.-% carboxylfunktionellen Monomeren liegen diese bevorzugt zu mindestens 50 % in neutralisierter Form vor.

Geeignete sonstige Monomere a5) zur Herstellung der erfindungsgemäßen Emulsionscopolymerisate für Spachtelmassen können z.B. sein:
Vinylchlorid, Vinylidenchlorid, N-Methylolacrylamid, Acrylamid, Methacrylamid, N-Methylolmethacrylamid, Diacetonacrylamid, Glycidylmethacrylat; Glycidylacrylat, N-Vinyl-pyrrolidon, Acetoacetylethylmethacrylat, Acetoacetylethylacrylat, Isocyanatoethylmethacrylat, N,N'-Dimethylaminomethacrylat, Vinyltriethoxysilan, Vinyltrimethoxysilan, Methacryloxypropyltrimethoxysilan, Vinylether, Allylether, Allylester, Vinylester, Vinylacetat, Vinylbutyrat.

Sonstige Monomere a5) können auch oligomere bzw. polymere Substanzen mit mindestens einer copolymerisierbaren Gruppe, sowie Substanzen mit mehr als einer copolymerisierbaren Gruppe sein. Wie z.B. Divinylbenzol, 1,6-Hexandiol-bisacrylsäureester, Trimethylolpropan-trisacryl-säureester, ethoxyliertes Bisphenol-A-dimethacrylat, Triethylenglykoldimethacrylat, Polyethylenglykoldimethacrylat, Dicyclopentadienylmethacrylat, Trimethylolpropandiallylether, Butadien, Cyclo-octatetraen, Polybutadiene, Umsetzungsprodukte von Polyestern bzw. Polyethem bzw Polyepoxiden mit Methacrylsäure und/oderAcrylsäure, Umsetzungsprodukte von Polyisocyanaten mit Hydroxyethylacrylat und/oder Hydroxyethylmethacrylat, und/oder Hydroxypropylacrylat und/oder Hydroxypropylmethacrylat und/oder Hydroxybutylacrylat und/oder Hydroxybutylmethacrylat.

Die Auswahl der Monomeren a1) bis a5) erfolgt dabei derart, dass stabile Emulsionen gebildetwerden.

Die Emulsionscopolymerisateweisen Molekulargewichte von vorzugsweise >25000 g/Mol, besonders bevorzugt von > 50000 g/Mol auf. Alle angegebenen Molekulargewichte sind Gewichtsmittel. Die Molekulargewichte können z.B. durch Gelpermeationschromatographie ermittelt werden.

Zur Erzielung besonderer Eigenschaften ist es auch möglich, Polymermischungen von Emulsionscopolymeren mit und ohne isocyanatreaktive Gruppen, insbesondere auch Emulsionscopolymere ohne Hydroxylgruppen einzusetzen.

Ganz besonders bevorzugte Emulsionscopolymerisate a) weisen einen Festkörpergehalt von 30 bis 55 %, eine Viskosität von 10 bis 5000 mPas/23°C, eine Säurezahl von 5 bis 30 mg KOH/g bezogen auf 100 % Feststoffgehalt, einen Hydroxylgruppengehalt von 0,2 bis 3,5 Gew.- % bezogen auf 100 % Feststoffgehalt, sowie einen pH-Wert von 5,5 bis 9 auf und enthalten eingebaut
a1) 50 bis 85 Gew.-% Styrol, Methylmethacrylat und/oder Butylmethacrylat, wobei mindestens 40, vorzugsweise mindestens 55 Gew.-% Styrol enthalten sind,
a2) 5 bis 30 Gew.-% n-Butylacrylat, Ethylacrylat und/oder 2-Ethylhexylacrylat,
a3) 2 bis 30 Gew.-% Hydroxypropylmethacrylat, Hydroxyethylmethacrylat, Hydroxypropylacrylat und oder Hydroxyethylacrylat
a4) 1 bis 4 Gew.-% Acrylsäure und/oder Methacrylsäure, wobei bei Mengen bis 1,5 Gew.-% diese zu mindestens 50 % in neutralisierter Form vorliegen, wobei die Summe der %-Zahlen a1 ) bis a4) 100 beträgt, und wobei 1,0 bis 2,0 Gew.-% bezogen auf Gesamtmenge Monomere an Emulgator bzw. Emulgatorgemischen und 0,15 bis 0,45 Gew.-% bezogen auf Gesamtmenge Monomere an Initiator bzw. Initiatorgemischen eingesetzt werden.

Geeignete Polyisocyanate b) sind Polyisocyanate mit freien Isocyanatgruppen auf Basis aliphatischer, cycloaliphatischer, aromatisch-aliphatischer und/ oder aromatischer Mono-, Di- und/oder Triisocyanate. Die Polyisocyanate weisen bei 23°C im Allgemeinen eine Viskosität von 10 bis 20 000, vorzugsweise von 10 bis 10 000 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken.

Geeignete monomere Isocyanate zur Herstellung der Polyisocyanate b) sind z.B. 1,6-Hexamethylendiisocyanat, 1,4-Butandiisocyanat, Isophorondlisocyanat, Bis-(4-isocyanato-cyclohexyl)methan, 1,4-Bis-isocyanatocyclohexan, 2,4- und/oder 2,6-Toluylendiisocyanat, Hexahydro-4- und/oder2,6-Toluylendlisocyanat Xylylendiisocyanat, m- bzw. p-Tetramethylxylylendiisocyanat, 1,3- bzw. 1,4-Bis-(2-isocyanatoethyl)cyclohexan, Bis-(2-isocyanatophenyl)methan, Bis-(4-isocyanatophenyl)-methan, Nonantriisocyanat, 1,5-Diisocya- nato-2,2-dimethylpentan, 2,2,4- bzw.2,4,4-Trimethyl-1,6-diisocyantohexan, 1,10-Diisocyanatodecan, Hexahydroxylylendiisocyanat, Tetrametylxylylendiisocyant, 4, (3)-Isocyanatomethylcyclohexyllsocyanat, Butanisocyanat, Phenylisocyanat, Stearylisocyanat und andere Isocyanate, wie sie z.B. in "Methoden der organischen Chemie" (Houben-Weyl, Bd 14/2, 4. Auflage, Georg Thieme Verlag, Stuttgart 1963, S. 61-70 beschrieben werden. Es können auch Mischungen der genannten und auch anderer Isocyanate eingesetzt werden. Bevorzugte Diisocyanate sind Hexamethylendiisocyanat, Isophorondiisocyanat und/oder Toluylendiisocyanat sowie als Triisocyanat Nonantriisocyanat.

Geeignete Polyisocyanate werden aus den genannten oder auch aus anderen Diisocyanaten und/ oder Triisocyanaten, gegebenenfalls unter Mitverwendung von Monound/oderTriisocyanaten oder unter Mitverwendung von Monoalkoholen, Diolen und/oder Polyolen nach literaturbekannten Methoden hergestellt und weisen z.B. Isocyanurat-, Biuret-, Allophanat-, Iminooxadiazindion-, Carbodiimid-, Uretdion-, Urethan-und/oder Harnstoffstruktureinheiten auf. Vorzugsweise werden Polyisocyanate mit mehr als 65% aliphatischen und/oder cycloaliphatisch gebundenen Isocyanatendgruppen und Isocyanurat, Allophanat-, Iminooxadiazindion- und/oder Urethanstruktureinheiten eingesetzt. Ganz besonders bevorzugte Polyisocyanate enthalten als Isocyanatbausteine, gegebenenfalls neben anderen, in der Regel hydroxylfunktionellen Bausteinen, Hexamethylendiisocyanat, Mischungen von Hexamethylendiisocyanat und Isophorondiisocyanat oder Isophorondiisocyant als Ausgangsmaterial.

Die zur Herstellung der Polyisocyanate verwendeten Diisocyanate können prinzipiell auch direkt als Polyisocyanat b) eingesetzt werden, dies ist jedoch nicht bevorzugt.

Polyisocyanatkomponenten b) können als hydrophobe Polyisocyante, dass heißt als keine hydrophilen, die Dispergierung unterstützenden bzw. ermöglichenden Struktureinheiten enthaltenden Polyisocyanate,eingesetzt werden. In diesem Fall werden bevorzugt Polyisocyanate mit einer Viskositäten < 1500, ganz besonders bevorzugt mit Viskositäten < 500 mPas/23°C eingesetzt. Dadurch ist eine gute Vermischung mit dem Reaktionspartner auch bei geringen Scherkräften sichergestellt. Falls die Eigenviskosität der hydrophoben Polyisocyanate nicht in dem bevorzugten Viskositätsbereich liegt, wird dieses vorzugsweise durch Zusatz geeigneter Verdünnungsmittel eingestellt.

Bevorzugte hydrophobe Polyisocyanatkomponenten b) sind z.B. niedrigviskose Hexamethylendiisocyanattrimerisate wie z.B. Desmodur® VP LS 2025/1 (Bayer AG), niedrigviskose Hexamethylendiisocyanatpolyisocyanate mit Uretdion- und/oder Allophanat- und/ oderTrimerisatstruktureinheiten wie z.B. DesmodurO N 3400 (Bayer AG), Desmodur VP LS 2102 (Bayer AG) und insbesondere Nonantriisocyanat.

Polyisocyanatkomponenten b) können auch als hydrophile Polyisocyanate eingesetzt werden. Eine Hydrophilierung ist z.B. durch Umsetzung der Polyisocyanate mit unterschüssigen Mengen an hydrophilierenden Polyetheralkoholen, z.B. auf Ethylenoxid- oder Ethylenoxid/Propylen-oxidbasis, die ein oder zwei isocyanatreaktiven Gruppen, vorzugsweise Hydroxylgruppen enthalten, möglich. Die Herstellung derartiger hydrophilierter Polyisocyanate ist beispielsweise in der EP-A 540 985 beschrieben.

Ebenfalls möglich ist eine Hydrophilierung mittels der oben beschriebenen Polyether durch Umsetzung unterschüssiger Mengen dieser Polyether unter Verwendung geeigneter Katalysatoren wie z.B. Zink-(II)-2-ethyl-1-hexanoat mit Polyisocyanaten, insbesondere Polyisocyanten mit Isocyanurat-, Biuret-, Urethan- und/oder Iminooxadiazindionstruktureinheiten unter Ausbildung von hydrophilierenden Allophanatstruktureinheiten ("Allophanathydrophilierung"). Durch diese Allophanathydrophilierung können z.B. zwei dreifach isocyanatfunktionelle Isocyanuratstrukturenheiten mittels eines Polyethermoleküls hydrophiliert werden. Solche Produkte zeichnen sich z.B. dadurch aus, dass aufgrund des speziellen Herstellverfahrens und der speziellen Struktur der hydrophilen Gruppen, eine besonders effektive Hydrophilierung und außerdem eine erhöhte Funktionalität vorliegt.

Es wurde gefunden, dass entsprechende Polyisocyanatkomponenten b) die Herstellung erfindungsgemäßer Spachtelmassen mit besonders hohem Eigenschaftsniveau, insbesondere bezüglich Härte, Schleifbarkeit, Beständigkeitseigenschaften und Haftung ermöglichen. Solche, durch Allophanathydrophilierung modifizierten Polyisocyanate b) werden daher ganz besonders bevorzugt eingesetzt.

Ebenso möglich ist eine Hydrophilierung durch Zusatz externer Emulgatoren ionischer und/oder nichtionischer Art zu den Polyisocyanaten.

] Ebenfalls möglich ist die Verwendung intern ionisch hydrophilierter Polyisocyanate, welche z.B. durch Umsetzung von Polyisocyanaten mit Hydroxy- oder Aminogruppen aufweisenden gegebnenfalls neutralisierten Säuren erhalten werden können.

Ebenfalls möglich ist die Verwendung von Polyisocyanaten, die sowohl eine hydrophil, als auch eine hydrophobe Modifizierung, z.B. durch Umsetzung mit langkettigen Monoalkoholen erfahren haben.

Ebenfalls möglich ist die Verwendung von Polyisocyanaten bzw. Polyisocyanatgemischen, die durch verschiedene der genannten und auch anderer Modifizierungen hydrophiliert worden sind.

Falls erforderlich kann auch die Einarbeitung hydrophiler Polyisocyanate zur Herstellung der erfindungsgemäßen Spachtelmassen durch Absenken der Viskosität mittels Zusatz organischer Verdünnungsmittel optimiert werden.

Je nach Anforderungsprofil können sowohl gering hydrophilierte, das heißt mit weniger als 5 Gew.-% hydrophilen Gruppen, als auch normal hydrophilierte, das heißt mit 5 bis 20 Gew.% hydrophilen Gruppen, als auch hochhydrophilierte Polyisocyanate, das heißt mit mehr als 20 Gew.% hydrophilen Gruppen eingesetzt werden.

Es können auch Mischungen verschiedener Polyisocyanate, z.B., Mischungen aus einem hydrophoben und einem hydrophilen Polyisocyanat, oder Mischungen von Polyisocyanaten auf verschiedener Diisocyanatbasis, wie z.B. eine Mischung aus einem cycloaliphatischem Polyisocyanat und einem aliphatischen Polyisocyanat eingesetzt werden.

in einerbevorzugten Ausführungsform werden mit Polyether gering oder normal hydrophilierte Polyisocyanate auf Basis von Hexamethylendiisocyanat oder isophorondiisocyanat, gegebenenfalls in Abmischung mit niedrigviskosen, hydrophoben Polyisocyanaten auf Basis von Hexamethylendiisocyanat, oder in Abmischung mit Nonantriisocyanat eingesetzt.

Ganz besonders bevorzugt ist die Verwendung von über die Allophanatbildung hydrophilierten Polyisocyanaten auf Basis von Hexamethylendiisocyanat, gegebenenfalls in Abmischung mit niedrigviskosen Hexamethylendiisocyanattrimerisaten wie z.B. Desmo- dur® VP LS 2025/1 (Bayer AG) oder/und niedrigviskosen Hexamethylendiisocyanatpolyisocyanaten mit Uretdion- und/oderAllophanatstruktureinheiten wie z.B. Desmodur® N 3400 (Bayer AG) oder DesmodurS VP LS 2102 (Bayer AG).

Ganz besonders bevorzugt ist auch die Verwendung von gegebenenfalls hydrophil modifizierten Hexamethylendiisocyanat-Polyisocyanaten mit Iminooxadiazindionstruktureinheiten gegebenenfalls in Kombination mit anderenPolyisocyanaten.

Je Äquivalent an isocyanatreaktiven Gruppen im Polymer a) und in der gegebenenfalls mitverwendeten Komponente e) werden mindestens 0,5 Äquivalente an Polyisocyanat b) eingesetzt. Vorzugsweise werden je Äquivalent Hydroxylgruppen in Polymer a) 0,8 bis 2,0, besonders bevorzugt 1 bis 1,4 Äquivalente an Polyisocyanat b) eingesetzt. Für den Fall, das Polymere ohne Hydroxylgruppen verwendet werden, wird mindestens soviel Polyisocyanat b) eingesetzt, als ob das Polymer 1 Gew.- %, vorzugsweise 2 oder mehr Gew.- % Hydroxylgruppen aufweisen würde.

Die Funktionalitäten der Polyisocyanate sind prinzipiell beliebig wählbar. Geeignet sind z.B. Polyisocyanate mit Funktionalitäten von 1,5 bis 7,5, vorzugsweise von 2,0 bis 6,5 und besonders bevorzugt von 2,4 bis 5,5.

Geeignete Komponenten c) - Pigmente, Füllstoffe, Extender, farbgebende oder sonstige Zusätze - können z.B. sein:
Talkum, Zinkoxide, Zinkphosphate, Schwerspat, Kaolin, Siliciumoxide, Silicate, Eisenoxide, Chromoxide, Titandioxide, sonstige anorganische oder auch organische Farbpigmente, mikronisierter Talk, Kreide, Calciumcarbonat, Dolomit, Calcit, Aluminiumhydroxid; Bariumsulfat, Aluminiumsilicate, Magnesiumsilikate, Feldspat, Eisenglimmer, Glasfasern, Glaskugeln.

Vorzugsweise als Komponenten c) können enthalten sein: Ein Talkum für gute Schleifbarkeit, ein Talkum für hohe Füllung, Zuschlagextender wie Calciumcarbonat oder Bariumsulfat, ein Korrosionsschutzpigment wie z.B. Zinkphosphat/Zinkoxid für metallische Untergründe und ein farbgebendes anorganisches Pigment wie z.B. Titandioxid.

Die erfindungsgemäßen wässrigen reaktiven Spachtelmassen lassen sich durch fachgerechte Auswahl der eingesetzten Talkumarten und -mengen bezüglich Haftung und Schleifbarkeit innerhalb weiter Grenzen optimieren. Dolomit, Calcit oder Schwerspat geben dem Spachtel ein kompaktes Gefüge, dies ist z. B. bei Feinspachteln sehr wichtig. Schwerspatmehle (möglichst mit niedrigem Eisengehalt) verbessern die Verziehbarkeit der Spachtel. Als farbgebende Pigmente werden vorzugsweise anorganische Pigmente wie z.B. Bayertitan-Rutiltypen, Chromoxid und/oder BayferroxO-Eisenoxidtypen in geringen Mengen, vorzugsweise weniger als 10 Gew.-%, bezogen auf Gesamtmenge an Komponenten c), eingesetzt.

Komponente(n) c) sind mengenmäßig die Hauptkomponente der erfindungsgemäßen Spachtel.

Bezogen auf Feststoffgehalte ist das Gewichtsverhältnis von c) zu allen anderen Komponenten 1,3 bis 20:1, vorzugsweise 1,5 bis 15:1 und ganz besonders bevorzugt 2,1 bis 10:1.

Geeignete Komponenten d) - Hilfsmittel, Zusatzmittel, Additive - können z.B. sein: Entschäumer, Verlaufshilfsmittel, Antiabsetzmittel, Katalysator, Entlüflungshilfsmittel, Stabilisatoren zur Verhinderung/Reduzierung von Abbau durch UV-Strahlung bzw. von oxidativem Abbau, Verdicker, Rheologiehilfsmittel, Thixotropierhilfsmittel, Benetzungshilfsmittel, Dispergierhilfsmittel, Konservierungsmittel, Verlaufshilfsmittel, Emulgatoren, Schutzkolloide; Antischaummittel, Korrosionsinhibitor, Antiausschwimmittel, Antihautmittel.

Bevorzugt eingesetzte Komponenten d) sind z.B. Antiabsetzmittel, Verdickungsmittel, Benetzungshilfsmittel, Entschäumer und Thixotropierhilfsmittel

Gegebenenfalls mit zu verwendende Komponenten e) können z.B. sein, 100 %, in gelöster oder in Form von gegebenenfalls wässrigen Dispersionen bzw. Emulsionen vorliegende, oligomere und/oder polymere Produkte wie z.B. Polyurethane, Polyurethan-Polyhamstoffe, Polyharnstoffe, Polymerisate, Acrylatcopolymerisate, Styrol enthaltende Polymere, Polyolefinharze, Polybutadienharze, Polyester, Ungesättigte Polyester, Alkydharze, zur oxidativen Vernetzung befähigte Polymere, Allylether enthaltende Produkte, Cellulose und Cellulosederivate, Melamin-Aldehyd-Harze, Harnstoffharze, Polyepoxide, Carbodiimidstrukturen enthaltend Produkte, Polyamine, Thiolgruppen enthaltende Produkte, Reaktivverdünner mit mindestens zwei isocyanatreaktiven Gruppen wie z.B. flüssige Diole, Triole, Tetraole, Aminoalkohole, Diamine oder Polyamine, insbesondere in Form von in der Reaktivität reduzierten Asparginsäureestem, z.B. erhältlich durch Umsetzung von primären, mindestens difunktionellen Aminen mit Maleinsäuredialkylestern, Produkte mit weichmachender Wirkung wie z.B. Dibutylphthalat oder Dioctylphthalat, Chlorkautschuk, Polyvinylchlorid, Polyvinylalkohol, Polyvinylester, Polyvinylpyrrolidon, Alkoxysilanstrukturen enthaltende Produkte, Fluor enthaltend Produkte, blokkierte Isocyanatgruppen enthaltende Substanzen, Phenolharze, carboxylfunktionelle Polymere bzw. Oligomere, epoxyfunktionelle Polymere bzw. Oligomere, carbodiimidfunktionelle Oligomere bzw. Polymere, Polyamidharze, Siliconharze, Wasserglas, Polymere oder Oligomere auf Basis von Kieselsäureestern, Kieselsole, Kieselgele.

Durch Zusatz der Komponenten e) können, falls dies für bestimmte Anforderungen notwendig ist, spezielle Eigenschaften der erfindungsgemäßen Spachtelmassen eingestellt werden, wie z. B. hohe Tieftemperaturelastizität bzw. Langzeitelastizität durch Mitverwendung spezieller linearer, aliphatischer Polyurethane z.B. für Anwendung auf hochelastischen Kunsstoffen, hohe Oberflächenglätte und schmutzabweisende Wirkung durch fluorhaltige Substanzen, sehr hohe Vernetzungsdichte durch hochfunktionelle, niedermolekulare Reaktivverdünner, zweiphasige Systeme bzw. Netzwerke, Benetzbarkeit, Optimierung der Naßhaftungbzw. Haftung der Spachtelmasse auf kritischen Untergründen durch Polybutadienharze, spezielle Hydrophobie durch Polyolefinharze, Überlackierbarkeit; Mattierungsverhalten, rheologisches Verhalten, Verarbeitbarkeit, spezielle Spachtelkonsistenz, Verarbeitungszeit.

Epoxy- und/oder carbodiimidfunktionelle Oligomere bzw. Polymere als Komponenten e) können zugesetzt werden, um z.B. mit Carboxylgruppen der Copolymerisatkomponente a) unter Ausbildung eines zweiten Netzwerkes neben dem Polyurethan- bzw. Polyurethan-Polyharnstoff-Netzwerk abzureagieren. Dadurch können z.B. Spachtelmassen mit besonders hohen Beständigkeitseigenschaften und sehr hoher Härte bzw. Vernetzungsdichteerhalten werden.

Ein geeignetes Verfahren zur Herstellung von reaktiven Spachtelmassen, ist dadurch gekennzeichnet, dass zunächst aus mindestens einem als Dispersion bzw. Emulsion vorliegenden Polymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/oder Wasserf) in einem geeigneten technischen Apparat eine Komponente, die mindestens 85 Gew.-% der erfindungsgemäßen Spachtelmasse ausmacht, mit der für eine praxisgerechte Verarbeitung erforderlichen Konsistenz hergestellt wird, und diese dann direkt vor der Anwendung mit der zweiten Komponente, die bis zu 15 Gew.-% der erfindungsgemäßen Spachtelmasse ausmacht, nämlich mindestens einem Polyisocyanatvernetzer b), zu der erfindungsgemäßen Spachtelmasse homogen vermischt wird.

Ein weiteres geeignetes Verfahren zur Herstellung von reaktiven Spachtelmassen, ist dadurch gekennzeichnet, dass zunächst aus mindestens einem, isocyanatreaktive Gruppen enthaltenden Emulsionscopolymer a) mit Pigment bzw. Pigmentgemischen_{;} Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/oder Wasserf) in einem geeigneten technischen Apparat eine Komponente, die 90,2 bis 99 Gew.-% der erfindungsgemäßen Spachtelmasse ausmacht, mit der für eine praxisgerechte Verarbeitung erforderlichen Konsistenz hergestellt wird, und diese dann direkt vor der Anwendung mit der zweiten Komponente, die 9,8 bis 1 Gew.-% der erfindungsgemäßen Spachtelmasse ausmacht, nämlich mindestens einem Polyisocyanatvernetzer b), zu der erfindungsgemäßen Spachtelmasse homogen vermischt wird.

Ein weiteres geeignetes Verfah ren zur Herstellung von reaktiven Spachtelmassen, ist dadurch gekennzeichnet, dass zunächst aus mindestens einem, isocyanatreaktive Gruppen enthaltenden Emulsionscopolymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 10 Gew.-% bezogen auf Gesamtfeststoffgehalt organischem Lösemittel und/oder Wasserf) in einem geeigneten technischen Apparat eine Komponente, die 95,1 bis 99 Gew.-% der erfindungsgemäßen Spachtelmasse ausmacht, mit der für eine praxisgerechte Verarbeitung erforderlichen Konsistenz hergestellt wird, und diese dann direkt vor der Anwendung mit der zweiten Komponente, die 4,9 bis 1 Gew.-% der erfindungsgemäßen Spachtelmasse ausmacht, nämlich mindestens einem Polyisocyanatvernetzer b), zu der erfindungsgemäßen Spachtelmasse homogen vermischt wird.

Ein weiteres geeignetes Verfah ren zur Herstellung von reaktiven Spachtelmassen, ist dadurch gekennzeichnet, dass zunächst aus mindestens einem, isocyanatreaktive Gruppen enthaltenden, als Dispersion bzw. Emulsion vorliegenden Polymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) gegebenenfalls bis zu 10 Gew.-% bezogen auf Gesamtfeststoffgehalt organischem Lösemittel und/oder Wasser f) und mindestens einem Polyisocyanatvernetzer b) die erfindungsgemäße Spachtelmasse in einem geeigneten technischen Apparat, unmittelbar vor der Anwendung der Spachtelmasse, hergestellt wird, und diese dann gegebenenfalls durch Zugabe von Wasser und/oder organischem Lösemittel auf die erforderliche Verarbeitungskonsistenz eingestellt wird

Komponenten a), b), c), d) und e) können prinzipiell in beliebiger Reihenfolge bei der Herstellung der erfindungsgemäßen Spachtelmassen ein- bzw. zugesetzt werden. Das optimale Verfahren ist im Einzelfall zu ermitteln und hängt z.B. vom jeweiligen Anforderungsprofil des Spachtels und der Reaktivität der einzelnen Rohstoffe ab.

Die erfindungsgemäßen wässrigen reaktiven 2-Komponenten Bindemittelkombinationen bieten die Möglichkeit, durch geeignete Rohstoffauswahl, Additive, Füllstoffe, Pigmente sowohl höchstreaktive wässrige Spachtelmassen mit außerordentlich schneller Schleifbarkeit, bei dann relativ kurzer Verarbeitungszeit, als auch wässrige Spachtelmassen mit relativ langer Verarbeitungszeit und trotzdem guter Reaktivität bzw. Schleifbarkeit herzustellen.

Durch geeignete Rohstoffauswahl, wie z.B. vorzugsweise aliphatische Polyisocyanate und geeigneter Acrylsäure- bzw. Methacrylsäureester ist es auch möglich, lichtechte wässrige reaktive Spachtelmassen herzustellen, die unter den Bedingungen der verschiedenen Anwendungen von Spachtelmassen keine Verfärbung, Kreidung oder Abbauerscheinungen zeigen.

Mit den erfindungsgemäßen Spachtelmassen ist es somit möglich, praktisch alle denkbaren Anforderungsprofile für Spachtelmassen zu erfüllen, auch solche die hier nicht beispielhaft genannt worden sind.

Die erfindungsgemäßen Spachtelmassen enthalten nur geringe Mengen flüchtiger organischer Substanzen. Deren Anteil beträgt vorzugsweise weniger als 12, ganz besonders bevorzugt weniger als 5 Gew.-%.

Geeignete technische Apparate zur Herstellung der erfindungsgemäßen wässrigen reaktiven Spachtelmassen können z.B. sein: Kneter, Mischer wie z.B. Planetenmischer oder Butterflymischer, Dissolver.

Die erfindungsgemäßen wässrigen reaktiven Spachtelmassen können beispielsweise appliziert werden als Ziehspachtel, Streichspachtei, Gießspachtel, Spritzspachtel.

Die Aushärtung der erfindungsgemäßen wässrigen reaktiven Spachtelmassen kann bei 0 bis 80°C, vorzugsweise bei Raumtemperatur erfolgen. Eine Aushärtung bei höheren Temperaturen oder insbesondere unter Einsatz von IR-Trocknern oder auch durch Mikrowellentrockner ist ebenfalls möglich.

Die erfindungsgemäßen wässrigen reaktiven 2-Komponenten-Bindemittelkombinationen sind hervorragend geeignet in oder als wässrige reaktive Spachtelmassen oder Reparaturspachtelmassen z.B. für Holz holzartige Untergründe und/oder Kork, für metallische Untergründe, Fahrzeugkarosserien und/oder Kunststoffe, für Marmor, Granit, Beton bzw. mineralische Untergründe.

Spachtelmassen dienen z.B. zur Herabsetzung des Saugvermögens saugender Untergründe, zum Füllen und Glätten von Kanten und Flächen, zum Auffüllen von Vertiefungen, Hohlräumen, Poren, Dellen, Kratzern bis hin zu Löchern.

Autoreparaturspachtel ermöglichen so z.B. das Wiederherstellen ebener bzw. glatter Oberflächen für die anschließende Lackierung, die üblicherweise aus Grundierung, Füller und Decklack(en) besteht.

Marmorspachtel ermöglichen so, nach Auffüllen von Vertiefungen, Hohlräumen und Poren, das Zuschneiden , Schleifen und Polieren der Werkstücke zu glatten, hochwertigen Marmorteilen, die z.B. als Boden-, Treppen- oder Fensterbankbelag dienen können.

Holzspachtel ermöglichen so z.B. das Füllen und Glätten von Fehlstellen, Astlöchern usw. in Holz bzw. Holzwerkstoffen, so dass anschließend eine einheitliche, flächige, hochwertige Lackierung erfolgen kann.

Die erfindungsgemäßen wässrigen reaktiven Spachtelmassen zeichnen sich aus durch schnelle Trocknung und Aushärtung auch in dicken Schichten und praxisgerechte Verarbeitungszeiten, durch hohe Härte, durch gute Haftung, auch auf kritischen Untergründen, durch gute Beständigkeitseigenschaften, durch sehr schnelle und sehr gute Schleifbarkeit, durch gute Verarbeitbarkeit, insbesondere Verziehbarkeit und eine praxisgerechte Spachtelkonsistenz, durch hohes Füllvermögen, durch die Möglichkeit lichtechte Spachtelmassen zu formulieren und insgesamt durch eine hohe Variabilität aus.

Unter wässrigen reaktiven Spachtelmassen sind dabei wässrige2-Komponenten-Bindemittelkombi- nationenen enthaltende Spachtelmassen zu verstehen, die neben mindestens einem Copolymer a) mindestens einen reaktiven Vemetzer mit freien Isocyanatgruppen b) enthalten, und unter Ausbildung eines Polyurethan- bzw. eines Polyurethan-Polyhamstoffnetz-werkes abreagieren. Die erfindungsgemäßen Bindemittelkombinationen für Spachtelmassen bzw. die damit hergestellten Spachtelmassen weisen ein beschränktes Potlife bzw. eine beschränkte Verarbeitungszeit auf. Durch Auswahl geeigneter Rohstoffe bei der Herstellung von a) bzw. b) und durch Auswahl von Art und Menge insbesondere der Komponente c), aber auch d) und gegebenenfalls e), ist ein Anpassen der Reaktivität und des Potlifes bzw. derverarbeitungszeit an die jeweiligen Anforderungen möglich. Es können außerordentlich reaktive Systeme, aber auch Systeme mit längerer Verarbeitungszeit und trotzdem guter Reaktivität hergestellt werden.

Die erfindungsgemäßen wässrigen reaktiven 2-Komponenten-Bindemittelkombinationen bzw. die daraus hergestellten wässrigen reaktiven Spachtelmassen sind auch geeignet zur Verwendung in Dübelmassen und als dickschichtige Füller. Die erfindungsgemäßen wässrigen reaktiven 2-Komponenten-Bindemittelkombinationen sind auch geeignet zur Verwendung in oder zu Herstellung von glasfaserverstärkten Kunststoffen bzw. glasfaserverstärkten Flächengebilden oder Gießmassen.

### Beispiele

### Komponenten b):

### Polyisocyanat 1)

Allophanathydrophiliertes Polyisocyanat 1) auf Basis von Hexamethylendiisocyanat: In einem Rührgefäß mit Rühr-, Kühl- und Heizvorrichtung werden 850 g eines Hexamethylendiisocyanat-Trimerists (Desmodur0 N 3300, Bayer AG) unter trockenem Stickstoff zusammen mit 0,05 g Dibutylphosphat (Stabilisator) und 0,4 g Zink-(II)-2-ethyl-1-hexanoat (Allophanatisierungskatalysator) bei 100°C vorgelegt. innerhalb von 40 Minuten werden dann 150 g eines Polyethylenglykolmonomethylethers (Pluriol® A 500E, OH-Zahl 112 mg KOH/g, BASF AG) so zudosiert, das die Reaktionstemperatur 105°C nicht überschreitet. Nach Ende der Polyetherzugabe wird weitere 2 bis 3 Stunden bei 100°C gerührt, bis der einer vollständigen Allophanatisierung theoretisch entsprechende Isocyanatgehalt von 15,9 % erreicht ist. Der Katalysatorwird dann durch Zugabe von 0,1 g Benzoylchlorid desaktiviert und das Reaktionsgemisch auf Raumtemperatur abgekühlt. Man erhält ein wasserdispergierbares, hydrophiliertes Polyisocyanat mit einer Viskosität von ca. 6000 mPas/23°C, einer Isocyanatfunktionalität von 4 und einem Isocyanatgehalt von 15,9 %.

### Polyisocyanat 2)

### Hydrophobes, niedrigviskoses Polyisocyanat 2):

4-lsocyanatomethyl-1,8-octandiisocyanat (Nonantriisocyanat, Bayer AG), Viskosität 12 mPas/ 23°C, Isocyanatfunktionalität 3, Isocyanatgehalt 50,1 %.

### Polyisocyanat 3)

### Hydrophiles Polyisocyanat 3):

Durch Umsetzung eines Isophorondiisocyanat-Trimerisats mit einem Polyether unter Urethanisierungsbedingungen erhaltenes hydrophiliertes Polyisocyanat. Gelöst 70 %ig in Methoxypropylacetat/Xylol, Viskosität 500 mPas/23°C, lsocyanatgehalt 9,5 % (Bayhydur® VP LS 2150/1, Bayer AG).

### Polyisocyanat 4)

### Hydrophobes, niedrigviskoses Polyisocyanat 4):

Uretdionstruktureinheiten enthaltendes Polyisocyanat auf Basis von Hexamethylendiisocyanat. Viskosität 200 mPas/23°C, lsocyanatfunktionalität 2,4, Isocyanatgehalt 22,0 % (DesmodurO N 3400, Bayer AG).

### Polyisocyanat 5)

### Hydrophobes Polyisocyanat 5):

Hexamethylendiisocyanattrimerisat mit Iminooxadizindionstruktureinheiten. Viskosität 1 000 mPas/23°C, Isocyanatgehalt 23,3 % (Desmodur^{g} VP LS 2294, Bayer AG).

### Polyisocyanat 6)

### Hydrophiles Polyisocyanat 6):

Durch Umsetzung eines Hexamethylendiisocyanat-Trimerisats mit einem Polyether unter Urethanisierungsbedingungen erhaltenes hydrophiliertes Polyisocyanat. Viskosität 3 000 mPas/23°C, Isocyanatgehalt 17,0 % (BayhydurS 3100, Bayer AG).

### Komponenten a):

### Beispiel 7)

### (Emulsionscopolymerisat 7):

In einem mit Stickstoff gespülten 3-1-Reaktionsgefäß mit Rühr-, Kühl- und Heizvorrichtung werden 880 g dreifachentsalztes Wasser und 9 g eines Emulgators mit ionischen und nichtionischen Gruppen (Emulgator 951, Alkylpolyglykolethersulfat-Ammoniumsalz, Bayer AG) eingewogen und unter einem leichten Stickstoffstrom auf 75°C erwärmt. Dann werden nacheinander 0,35 g tert.-Butylhydroperoxid, 0,88 g einer Lösung von 0,1 g Eisen-II-sulfat und 2,0 g Trilon® B in 100 g Wasser und eine Lösung von 0,22 g Rongalit@ C in 4,8 g Wasser zugegeben. Von einer Monomermischung aus 31 g Acrylsäure, 100 g n-Butylacrylat, 611 g Styrol und 258 g Hydroxypropylmethacrylat werden anschließend 100 g in 5 Minuten zudosiert und die Reaktionsmischung bei 75°C für 30 Minuten gerührt. Die restlichen 900 g der Monomermischung werden anschließend in 4 Stunden zudosiert. Parallel dazu werden 2,64 g tert.-Butylhydroperoxid und 6,8 g der Eisen-II-sulfat/ Trilon B-Lösung in 232 g Wasser, sowie 2,0 g Rongalit C und 8,8 g Emulgator 951 in 232 g Wasser zudosiert. Nach Ende der Zugabe wird 2 Stunden bei 75°C nachgerührt, auf 45°C abgekühlt und dann eine Lösung von 14,9 g 25%igem Ammoniakwasser in 25 g Wasser zugegeben und homogenisiert. Nach Abkühlen auf 40°C wird filtriert. Man erhält Emulsionscopolymerisat 7) mit einem Feststoffgehalt von 43 %, einer Viskosität bei 23°C von 350 mPas und einem pH-Wert von 8,3. Der Hydroxylgruppengehalt des Feststoffes beträgt 2 Gew.- %.

### Beispiel 8

### (Emulsionscopolymerisat 8):

In einem mit Stickstoff gespülten 3-1-Reaktionsgefäß mit Rühr-, Kühl- und Heizvorrichtung werden 840 g dreifachentsalztes Wasser und 9,5 g eines Emulgators mit ionischen und nichtionischen Gruppen ( Emulgator 951, Bayer AG) eingewogen und unter einem leichten Stickstoffstrom auf 75°C erwärmt. Dann werden nacheinander 0,35 g tert.-Butylhydroperoxid, 0,88 g einer Lösung von 0,1 g Eisen-II-sulfat und 2,0 g Trilon B in 100 g Wasser und eine Lösung von 0,22 g Rongalit C in 4,8 g Wasser zugegeben. 100 g einer 1. Monomermischung aus 19 g Acrylsäure, 287 g n-Butyl- acrylat, 272 g Styrol und 22 g Hydroxypropylmethacrylat wird in 5 Minuten zudosiert und die Reaktionsmischung bei 75°C für 30 Minuten gerührt. Die restlichen 500 g der 1. Monomermischung werden anschließend in 135 Minuten zudosiert. Direkt im Anschluß daran wird eine 2. Monomermischung bestehend aus 12 g Acrylsäure, 238 g Methylmethacrylat und 150 g Hydroxypropylmethacrylat in 105 Minuten zudosiert. Parallel zur Zugabe der 1. und 2. Monomermischung werden 2,64 g tert.-Butylhydroperoxid und 6,8 g der Eisen-II-sulfat/Trilon® B-Lösung in 232 g Wasser, sowie 2,0 g Rongalit C und 9_{;}5 g Emulgator 951 in 232 g Wasser in 4 Stunden zudosiert. Nach Ende der Zugabe wird 2 Stunden bei 75°C nachgerührt, auf 45°C abgekühlt und dann eine Lösung von 14,9 g 25%igem Ammoniakwasser in 25 g Wasser zugegeben und homogenisiert. Nach Abkühlen auf 40°C wird filtriert. Man erhält Emulsionscopolymerisat 8) mit einem Feststoffgehalt von 43 %, einer Viskosität bei 23°C von 1000 mPas und einem pH-Wert von 7,5. Der Hydroxylgruppengehalt des Feststoffes beträgt 3 Gew.-%.

### Beispiel 9

### (Emulsionscopolymerisat 9):

In einem mit Stickstoff gespülten 3-1-Reaktionsgefäß mit Rühr-, Kühl- und Heizvorrichtung werden 850 g dreifachentsalztes Wasser und 9,5 g eines Emulgators mit ionischen und nichtionischen Gruppen (Emulgator 951, Bayer AG) eingewogen und unter einem leichten Stickstoffstrom auf 75°C erwärmt. Dann werden nacheinander 0,35 g tert.-Butylhydroperoxid, 0,88 g einer Lösung von 0,1 g Eisen-II-sulfat und 2,0 g Trilon B in 100 g Wasser und eine Lösung von 0,22 g Rongalit® C in 4,8 g Wasser zugegeben. Von einer Monomermischung aus 31 g Acrylsäure, 100 g n-Butylacrylat, 510 g Styrol und 172 g Hydroxypropylmethacrylat werden anschließend 100 g in 5 Minuten zudosiert und die Reaktionsmischung bei 75°Cfür30 Minuten gerührt. Die restlichen 900 g der Monomermischung werden anschließend in 4 Stunden zudosiert. Parallel dazu werden 2,64 g tert.-Butylhydroperoxid und 6,8 g der Eisen-IIsulfat/Trilon® B-Lösung in 232 g Wasser, sowie 2,0 g Rongalit C und 9,5 g Emulgator 951 in 232 g Wasser zudosiert. Nach Ende der Zugabe wird 2 Stunden bei 75°C nachgerührt, auf 45°C abgekühlt und dann eine Lösung von 14,9 g 25%igem Ammoniakwasser in 25 g Wasser zugegeben und homogenisiert. Nach Abkühlen auf 40°C wird filtriert. Man erhält Emulsionscopolymerisat 9) mit einem Feststoffgehalt von 43 %, einer Viskosität bei 23°C von 280 mPas und einem pH-Wert von 8,6. Der Hydroxylgruppengehalt des Feststoffes beträgt 2 Gew.-%.

### Beispiel 10

### (Emulsionscopolymerisat 10):

In einem mit Stickstoff gespülten 3-1-Reaktionsgefäß mit Rühr-, Kühl- und Heizvorrichtung werden 800 g dreifachentsalztes Wasser und 9,5 g eines Emulgators mit ionischen und nichtionischen Gruppen ( Emulgator 951, Bayer AG) eingewogen und unter einem leichten Stickstoffstrom auf 75°C erwärmt. Dann werden nacheinander 0,35 g tert.-Butylhydroperoxid, 0,88 g einer Lösung von 0,1 g Eisen-II-sulfat und 2,0 g Trilon@ B in 100 g Wasser und eine Lösung von 0,22 g Rongalit C in 4,8 g Wasser zugegeben. Von einer Monomermischung aus 31 g Acrylsäure, 287 g n-Butylacrylat, 596 g Styrol und 86 g Hydroxypropylmethacrylat werden anschließend 100 g in 5 Minuten zudosiert und die Reaktionsmischung bei 75°C für30 Minuten gerührt. Die restlichen 900 g der Monomermischung werden anschließend in 4 Stunden zudosiert. Parallel dazu werden 2,64 g tert.-Butylhydroperoxid und 6,8 g der Eisen-II-sulfat/Trilon® B-Lösung in 232 g Wasser, sowie 2,0 g Rongalit@ C und 9,5 g Emulgator 951 in 232 g Wasser zudosiert. Nach Ende der Zugabe wird 2 Stunden bei 75°C nachgerührt, auf 45°C abgekühlt und dann eine Mischung von 10,9 g 25%igem Ammoniakwasser in 25 g Wasser und 13 g Triethylamin zugegeben und homogenisiert. Nach Abkühlen auf 40°C wird filtriert. Man erhält Emulsionscopolymerisat 10) mit einem Feststoffgehalt von 44 %, einer Viskosität bei 23°C von 550 mPas und einem pH-Wert von 7,6.Der Hydroxylgruppengehalt des Feststoffes beträgt 1 Gew.-%.

### Beispiel 11

### (Emulsionscopolymerisat 11):

In einem mit Stickstoff gespülten 3-1-Reaktionsgefäß mit Rühr-, Kühl- und Heizvorrichtung werden 900 g dreifachentsalztes Wasser und 9,5 g eines Emulgators mit ionischen und nichtionischen Gruppen ( Emulgator 951, Bayer AG) eingewogen und unter einem leichten Stickstoffstrom auf 75°C erwärmt. Dann werden nacheinander 0,35 g tert.-Butylhydroperoxid, 0,88 g einer Lösung von 0,1 g Eisen-II-sulfat und 2,0 g Trilon B in 100 g Wasser und eine Lösung von 0,22 g Rongalit® C in 4,8 g Wasser zugegeben. Von einer Monomermischung aus 16 g Acrylsäure, 224 g 2-Ethylhexylacrylat, 100 g n-Butylmethacrylat, 305 g Styrol, 200 g Methylmethacrylat und 155 g Hydroxyethylmethacrylat werden anschließend 100 g in 5 Minuten zudosiert und die Reaktionsmischung bei 75°C für 30 Minuten gerührt. Die restlichen 900 g der Monomermischung werden anschließend in 4 Stunden zudosiert. Parallel dazu werden 2,64 g tert.-Butylhydroperoxid und 6,8 g der Eisen-II-sulfat/Trilon® B-Lösung in 232 g Wasser, sowie 2,0 g Rongalit® C und 9,5 g Emulgator 951 in 232 g Wasser zudosiert. Nach Ende der Zugabe wird 2 Stunden bei 75°C nachgerührt, auf 45°C abgekühlt, 26 g Triethylamin zugegeben und homogenisiert. Nach Abkühlen auf 40°C wird filtriert. Man erhält Emulsionscopolymerisat 11) mit einem Feststoffgehaltvon 41 %, einer Viskosität bei 23°C von 120 mPas und einem pH-Wert von 8,6. Der Hydroxylgruppengehalt des Feststoffes beträgt 1 Gew.-%.

### Beispiel 12

### (Emulsionscopolymerisat 12):

In einem mit Stickstoff gespülten 3-1-Reaktionsgefäß mit Rühr-, Kühl- und Heizvorrichtung werden 984 g dreifachentsalztes Wasser und 8,8 g eines Emulgators mit ionischen und nichtionischen Gruppen ( Emulgator 951, Bayer AG) eingewogen und unter einem leichten Stickstoffstrom auf 75°C erwärmt. Dann werden 0,39 g Ammoniumperoxodisulfat gelöst in 5 g Wasser zugegeben. Von einer Monomermischung aus 31 g Acrylsäure, 287 g n-Butylacrylat, 510 g Styrol und 172 g Hydroxypropylmethacrylat werden anschließend 100 g in 5 Minuten zudosiert und die Reaktionsmischung bei 75°C für 30 Minuten gerührt. Die restlichen 900 g der Monomermischung werden anschließend in 4 Stunden zudosiert. Parallel dazu werden 2,94 g Ammoniumperoxodisulfat und 8,8 g Emulgator 951 gelöst in 233 g Wasser zudosiert. Nach Ende der Zugabe wird 2 Stunden bei 75°C nachgerührt, auf 45°C abgekühlt und dann eine Lösung von 12,7 g 25%igem Ammoniakwasser und 6,7 g Dimethylethanolamin in 25 g Wasser zugegeben und homogenisiert. Nach Abkühlen auf 40°C wird filtriert. Man erhält Emulsionscopolymerisat 12) mit einem Feststoffgehalt von 44 %_{;} einer Viskosität bei 23°C von 150 mPas und einem pH-Wert von 7,6. Der Hydroxylgruppengehalt des Feststoffes beträgt 2 Gew.-%.

### Vergleichsbeispiel 13

### (Copolymer 13)

Beispiel G aus der EP-A 358 979 wurde nachgestellt. Man erhält eine sehr feinteilige wässrige Sekundärdispersion bzw. wässrige Polymer-Lösung mit einem Feststoffgehaltvon 27%, einerViskositätvon 6000 mPas und einem pH-Wert von 7,1. Der Anteil hydroxyfunktioneller Monomere beträgt 30,6 Gew.-%, der Anteil carboxyfunktioneller Monomere, die in neutralisierter Form vorliegen, beträgt 10 Gew.-%. Der Hydroxylgruppengehalt beträgt 4,1 Gew.-%.

### Beispiel 14

### (Emulsionscopolymerisat 14)

In einem mit Stickstoff gespülten 3-1-Reaktionsgefäß mit Rühr-, Kühl- und Heizvorrichtung werden 880 g dreifachentsalztes Wasser und 9 g eines Emulgators mit ionischen und nichtionischen Gruppen ( Emulgator 951, Bayer AG) eingewogen und unter einem leichten Stickstoffstrom auf 75°C erwärmt. Dann werden nacheinander 0,35 g tert.-Butylhydroperoxid, 0,88 g einer Lösung von 0,1 g Eisen-II-sulfat und 2,0 g Trilon B in 100 g Wasser und eine Lösung von 0,22 g Rongalit® C in 4,8 g Wasser zugegeben. Von einer Monomermischung aus 31 g Acrylsäure, 327g n-Butylacrylat und 642 g Styrol werden anschließend 100 g in 5 Minuten zudosiert und die Reaktionsmischung bei 75°C für 30 Minuten gerührt. Die restlichen 900 g der Monomermischung werden anschließend in 4 Stunden zudosiert. Parallel dazu werden 2,64 g tert.-Butylhydroperoxid und 6,8 g der Eisen-II-sulfat/Trilon® B-Lösung in 232 g Wasser, sowie2,0 g Rongalit®C und 8,8 g Emulgator 951 in 232 g Wasser zudosiert. Nach Ende der Zugabe wird 2 Stunden bei 75°C nachgerührt, auf 40°C abgekühlt und filtriert. Man erhält Emulsionscopolymerisat 14) mit einem Feststoffgehalt von 43 %, einer Viskosität bei 23°C von 90 mPas und einem pH-Wert von 7,4.

### Beispiel 15

### (Emulsionscopolymerisat 15)

In einem mit Stickstoff gespülten 3-1-Reaktionsgefäß mit Rühr-, Kühl- und Heizvorrichtung werden 880 g dreifachentsalztes Wasser und 9 g eines Emulgators mit ionischen und nichtionischen Gruppen ( Emulgator 951, Bayer AG) eingewogen und unter einem leichten Stickstoffstrom auf 75°C erwärmt. Dann werden nacheinander 0,35 g tert.-Butylhydroperoxid, 0,88 g einer Lösung von 0,1 g Eisen-II-sulfat und 2,0 g Trilon B in 100 g Wasser und eine Lösung von 0,22 g Rongalit® C in 4,8 g Wasser zugegeben. Von einer Monomermischung aus 31 g Acrylsäure, 287g n-Butylacrylat, 172 g Hydroxypropylmethacrylat, 100 g Methylmethacrylat und 410 g Styrol werden anschließend 100 g in 5 Minuten zudosiert und die Reaktionsmischung bei 75°C für 30 Minuten gerührt. Die restlichen 900 g der Monomermischung werden anschließend in 4 Stunden zudosiert. Parallel dazu werden 2,64 g tert.-Butylhydroperoxid und 6,8 g der Eisen-II-sulfat/Trilon® B-Lösung in 242 g Wasser, sowie 2,0 g Rongalit® C und 8,8 g Emulgator 951 in 232 g Wasser zudosiert. Nach Ende der Zugabe wird 2 Stunden bei 75°C nachgerührt, auf 40°C abgekühlt und filtriert. Man erhält Emulsionscopolymerisat 15) mit einem Feststoffgehalt von 432%, einer Viskosität bei 23°C von 70 mPas und einem pH-Wert von 7,8. Der Hydroxylgruppengehalt des Feststoffes beträgt 2 Gew.-%.

### Vergleichsbeispiel 16

### (Polymer 16)

Beispiel 1 aus EP 841 352 wurde nachgestellt. Man erhält eine feinteilige wässrige Polyacrylat-Sekundärdispersion mit einem Feststoffgehalt von 37 %, einer Viskosität von 1400 mPas und einem pH-Wert von 7,5. Der Anteil hydroxyfunktioneller Monomere beträgt 32,6 Gew.-%, derAnteilcarboxyfunktioneller Monomere; die zu ca. 50% in neutralisierter Form vorliegen, beträgt 5,3 Gew.-%. Der Hydroxylgruppengehalt beträgt 4,0 Gew.- %.

### Vergleichsbeispiel 17

### (Polymer 17)

Gemäß EP 543 228 hergestellte Polyester-Polyacrylat-Sekundärdispersion (Bayhydrol® VP LS 2290, Bayer AG) mit einem Feststoffgehalt von 44 %, einer Viskosität von 1500 mPas und einem pH-Wert von 8,0. Der Hydroxylgruppengehalt beträgt 4,0 Gew.-%.

### Vergleichsbeispiel 18

### (Polymer 18)

Eine Polymerisat-Sekundärdispersion gemäß Beispiel 1 aus der EP-A 170 184 wurde nachgestellt. Man erhält eine feinteilige wässrige Sekundärdispersion mit einem Feststoffgehalt von 31 %, einer Viskosität von 1200 mPas.

### Anwendungsbeispiel A)

In einem Labordissolver wird eine Spachtelmasse aus 100 g Emulsionscopolymerisat 7), 10 g einer Wasser/Butylglykol 1:1 Mischung, 10 g Finntalk® M 40 (Talkum für gute Schleifbarkeit, Finnminerals, Finnland), 75g Westmin@ D 100 (Talkum für hohe Füllung, Westmin Minerals, Australien), 1,3 g Foamaster® TCX (Entschäumer, Henkel, Deutschland), 50 g Mikhart® 10 (Calciumcarbonat, Zuschlagextender, Provenciale, Frankreich), 10 g Zinkphosphat ZP10 (Korrosionschutzpigment, Heubach, Deutschland) und zusätzlich 25 g Finntalk® als zusätzlich, variable Zusatzmenge zur Einstellung der Spachtelkonsistenz, hergestellt.

100 g dieser ersten Komponente werden im Laborrührer mit 6 g Polyisocyanat 1) homogen vermischt.

Die so hergestellte erfindungsgemäße wässrige reaktive Spachtelmasse 19) wird bei Raumtemperatur in einer Schichtdicke von ca. 1 mm auf ungeschliffene Karosseriebleche aufgezogen.
Folgende Prüfergebnisse wurden ermittelt:
- Spachtelkonsistenz ¹ gut
- Verziehbarkeitbarkeit²: gut
- Schleifbarkeit³: nach 30 Minuten 2a nach 45 Minuten Oa
   1 Die Beurteilung der Spachtelkonsistenz erfolgt nach folgende quali tativen Abstufung:: Gut>zufriedenstellend>dick bzw. dünn>zu dick bz w. zu dünn.
   ² Die Beurteilung der Verziehbarkeit erfolgt nach folgender qualitativen Abstufung:
   Gut verziehbar>noch gut verziehbar>schwer verziehbar>nicht verziehbar.
   Haftung⁴: sehr gut (nach 45 Minuten)
   Pendelhärte⁵: nach 4 Stunden Raumtemperaturtrocknung: 26"
      nach 24 Stunden Raumtemperaturtrocknung: 114"
      nach 2 Stunden Trocknung bei 80°C: 143"
   - Trocknungszeit⁶: 70 Minuten
   Potlife⁷: > 8 Stunden
   Verarbeitungszeit⁸: 12 Minuten

Die erfindungsgemäße wässrige reaktive Spachtelmasse zeigt durchweg hervorragende Eigenschaften. Sieh vereint gute Verarbeitbarkeit mit schneller Trocknung und sehr schneller guter Schleifbarkeit, es wird eine sehr schnelle Haftung erreicht, Härte und Potlife genügen auch hohen Anforderungen.

Sehrwichtig ist auch die Zeit bis die gewünschte Schleifbarkeit erreicht ist, je kürzer die benötigte Zeit, umso besser. Das Erreichen einer guten Schleifbarkeit innerhalb einer Stunde bei Raumtemperaturaushärtung ist dabei insgesamt als sehr gut zu bewerten. Spachtelmassen, die bei Raumtemperatur länger als drei Stunden zum Erreichen einer guten Schleifbarkeit benötigen, sind insgesamt als nicht geeignet zu beurteilen.

Außerdem wird auch das Zusetzen des Schleifpapiers während des Schleifens beurteilt, dabei bedeutet a = setzt nicht zu (beste Bewertung), b = setzt etwas zu und c = setzt stark zu (schlechteste Bewertung).

### Anwendungsbeispiel B)

Die gleiche Menge der ersten Komponente Die Beurteilung der Schleifbarkeit erfolgt wie folgt:
Die Schleifbarkeit selbst wird von sehr gut =0 bis sehr schlecht=5, mit den Zwischenabstufungen gut = noch gut 2, mäßig = 3, schlecht = 4, beurteilt.
⁴ Die Haftung wird anhand der Dauer bis zum Erreichen einer guten Haftung beurteilt:
   Haftung innerhalb von 2 Stunde: Sehr gut
   Haftung innerhalb von 6 Stunden: Gut
   Haftung innerhalb von 24 Stunden: noch akzeptabel
   Dauer bis zum Erreichen einer guten Haftung mehr als 24 Stunden, bzw. überhaupt keine
   Haftung: Schlecht
⁵ Die Pendelhärte (DIN 53157) wird an Filmen (250 µm naß) der Bindemittelkombination aus Komponente a) und Komponente b) nach Zugabe von 10 Gew.-% Butylglykol und Entschäumer durchgeführt, um vergleichbare Werte ohne Einfluß der Komponente c) zu erhalten. Dabei sind Pendelhärten von >100" nach 24 Stunden Trocknung bei Raumtemperatur als sehr gut zu bezeichnen.
⁶ Die Trocknungszeit wird an den Filmen entsprechend der Pendelhärtebestimmung, allerdings mit einer Naßfilmstärke von 500 µm gemessen. Angegeben ist die Zeit, bis einer Prüfung mit Finger keine Abdrücke mehr erkennbar sind (Fingertrocknung). Je schneller die Trocknung, umso besser die Eignung für Spachtelmassen. ⁷ Als Potlife wurde die Zeitspanne definiert, bis eine reaktive wässrige 2-Komponenten-Bindemittel-Kombination aus Polymer a) und Polyisocyanat b) erkennbare Veränderungen zeigt, wie z.B. deutlicher Viskositätsanstieg, Klumpenbildung, Ausfällungen oder Vernetzung.
(Identische Herstellung mit Emulsionscopolymer 7), mit dem einzigen Unterschied, dass bei der Herstellung die variable Zusatzmenge Finntalk® M 40 von 30 g auf 20 g reduziert wurde) aus Anwendungsbeispiel A) wird im Laborrührer mit 1,5 g Polyisocyanat 2) homogen vermischt und wie oben beschrieben als Spachtel appliziert.
Folgende Prüfergebnisse wurden ermittelt:
   - Spachtelkonsistenz: gut
   - Verziehbarkeit: gut
   - Schleifbarkeit: nach 30 Minuten 0-1 a nach 45 Minuten 0-1 a nach 60 Minuten Oa
   - Haftung: sehr gut (nach 45 Minuten)
   - Lagerstabilitätsprüfung: Beurteilung der Spachtelkonsistenz der ersten Komponente bei Raumtemperaturlagerung
      nach 10 Tagen: in Ordnung
      nach 20 Tagen: in Ordnung
      nach 30 Tagen: in Ordnung
      nach 60 Tagen: in Ordnung
      nach 90 Tagen: in Ordnung

Die erfindungsgemäße wässrige reaktive Spachtelmasse zeigt ebenfalls gute Verarbeitbarkeit, sehr schnelle Schleifbarkeit und Haftung.

### Anwendungsbeispiel C)

Die erste Komponente der Spachtelmasse wird gemäß Anwendungsbeispiel A) hergestellt, mit dem Unterschied, dass als Copolymer Emulsionscopolymer 8) eingesetzt wird und bei der Herstellung die variable Zusatzmenge Finntalk® M 40 15 g reduziert wurde) 100 g dieser so erhaltenen ersten Komponente wird im Laborrührer mit 4,2 g Polyisocyanat 1) homogen vermischt und wie oben beschrieben als Spachtel appliziert.
Folgende Prüfergebnisse wurden ermittelt:
- Spachtelkonsistenz: gut
- Verziehbarkeit: gut
- Schleifbarkeit: nach 30 Minuten 0-1 a nach 45 Minuten 0-1 a nach 60 Minuten Oa
- Haftung: sehr gut (nach 45 Minuten)
   ⁸Als Verarbeitungszeit wird der Zeitraum angegeben, in dem die wässrige reaktive Spachtelmasse sicher verarbeitbar ist und zu reproduzierbaren Ergebnissen führt. Häufig ist die tatsächliche Verarbeitungszeit länger, diese Zeit kann jedoch Schwankungen unterworfen sein, es können schon erste Veränderungen der Spachtelmasse, wie z.B. Hautbildung oder Veränderungen in den Applikationseigenschaften, wie z.B. eine weniger gute Verziehbarkeit, oder Veränderungen in den Endeigenschaften der applizierten Spachtelmassen, wie eine etwas verlängerte Zeit bis zum Ereichen einer guten Haftung auftreten. Trotz dieser beginnenden Veränderungen ist es häufig noch möglich, ausgehärtete Spachtelmassen mit guten Endeigenschaften nach Applikation und Aushärtung zu erhalten.
- Lagerstabilitätsprüfung: Beurteilung der Spachtelkonsistenz der ersten Komponente bei Raumtemperaturlagerung
   nach 10 Tagen: in Ordnung
   nach 20 Tagen: in Ordnung
   nach 30 Tagen: in Ordnung
   nach 60 Tagen: in Ordnung
   nach 90 Tagen: in Ordnung

Die erfindungsgemäße wässrige reaktive Spachtelmasse zeigt ebenfalls gute Verarbeitbarkeit, sehr schnelle Schleifbarkeit und Haftung.

### Anwendungsbeispiel D)

Die erste Komponente der Spachtelmasse wird gemäß Anwendungsbeispiel A) hergestellt, mit dem Unterschied, dass als Copolymer Emulsionscopolymer 9) eingesetzt wird, und als variable Zusatzmenge Finntalk® M 40 45 g zugegeben werden. 100 g dieser so erhaltenen ersten Komponente werden mit 3,87 g Polyisocyanat 1) homogen vermischt und wie oben beschrieben als Spachtel appliziert.

Folgende Prüfergebnisse wurden ermittelt:
- Spachtelkonsistenz: gut
- Verziehbarkeit: noch gut verziehbar
Schleifbarkeit: nach 30 Minuten 0-1 a nach 45 Minuten Oa
- Haftung: gut
Pendelhärte: nach 4 Stunden Raumtemperaturtrocknung: 51
   nach 24 Stunden Raumtemperaturtrocknung: 96"
   nach 2 Stunden Trocknung bei 80°C: 110"
Trocknungszeit: 60 Minuten
- Potlife: > 4 Stunden
Verarbeitungszeit: 5 Minuten

Die erfindungsgemäße Spachtelmasse überzeugt vor allem durch eine schnelle Trocknung und Antrocknung, rasche Härteentwicklung und gute Schleifbarkeit.

### Anwendungsbeispiel E)

Die erste Komponente der Spachtelmasse wird gemäß Anwendungsbeispiel A) hergestellt, mit dem Unterschied, dass als Copolymer Emulsionscopofymer 10) eingesetzt wird, und als variable Zusatzmenge Finntalk® M 40 20 g zugegeben werden. 100 g dieser so erhaltenen ersten Komponente werden mit 4,27 g Polyisocyanat 1) homogen vermischt und wie oben beschrieben als Spachtel appliziert. Folgende Prüfergebnisse wurden ermittelt:
- Spachtelkonsistenz: gut
- Verziehbarkeit: gut verziehbar
- Schleifbarkeit: nach 30 Minuten 5 nach 45 Minuten Oa
- Haftung: gut
- Pendelhärte: nach 4 Stunden Raumtemperaturtrocknung: 13"
   nach 24 Stunden Raumtemperaturtrocknung: 47"
   nach 2 Stunden Trocknung bei 80°C: 116"
- Trocknungszeit: 70 Minuten
- Potlife: > 4 Stunden
- Verarbeitungszeit: 12 Minuten

Diese erfindungsgemäße Spachtelmasse überzeugt vor allem durch ein spezielles Trocknungsverhalten. Sie ist gut verarbeitbar und kann für eine relativ lange Zeitspanne nach dem Aufziehen verformt werden (ca. 30 Minuten), sie trocknet nach dieser verzögerten Antrocknung außerordentlich schnell durch.

### Anwendungsbeispiel F)

Die erste Komponente der Spachtelmasse wird gemäß Anwendungsbeispiel A) hergestellt, mit dem Unterschied, dass als Copolymer Emulsionscopolymer 11) eingesetzt wird. 100 g dieser so erhaltenen ersten Komponente werden mit 4,27 g Polyisocyanat 1) homogen vermischt und wie oben beschrieben als Spachtel appliziert.
Folgende Prüfergebnisse wurden ermittelt:
- Spachtelkonsistenz: gut
- Verziehbarkeit: gut verziehbar
- Schleifbarkeit: nach 30 Minuten 5 nach 45 Minuten 3a nach 60 Minuten 1a a nach 75 Minuten Oa
- Trocknungszeit: 80 Minuten
- Potlife: > 8 Stunden
- Verarbeitungszeit: 10 Minuten

Diese erfindungsgemäße Spachtelmasse überzeugt vor allem durch gute Verarbeitbarkeit und hohe Elastizität.

### Vergleichsbeispiel G)

Die erste Komponente der Spachtelmasse wird gemäß Anwendungsbeispiel A) hergestellt, mit dem Unterschied, dass als Copolymer eine äquivalente Menge Copolymer 16) eingesetzt wird, und als variable Zusatzmenge Finntalk® M 40 25 g zugegeben werden. 100 g dieser so erhaltenen ersten Komponente werden mit 8,8 g Polyisocyanat 1) homogen vermischt und wie oben beschrieben als Spachtel appliziert. Folgende Prüfergebnisse wurden ermittelt:
Spachtelkonsistenz: dick, nach 1 Tag stark eingedickt
- Verziehbarkeit: schwer verziehbar
Schleifbarkeit: nach 60 Minuten 5
   nach 120 Minuten 5
   nach 180 Minuten 5
   nach 240 Minuten 5
   nach 300 Minuten 5
   nach 24 Stunden 2a-b, weich
- Trocknungszeit: 120 Minuten

Diese Spachtelmasse trocknet langsam und ist selbst nach 24 Stunden Trocknung noch nicht im erforderlichen Maße schleifbar. Sie zeigt außerdem eine sehr eingeschränkte Stabilität und eine weniger gute Verarbeitbarkeit.

### Vergleichsbeispiel H)

Die erste Komponente der Spachtelmasse wird gemäß Anwendungsbeispiel A) hergestellt, mit dem Unterschied, dass als Copolymer eine äquivalente Menge Copolymer 17) eingesetzt wird, und als variable Zusatzmenge Finntalk® M 40 25 g zugegeben werden. 100 g dieser so erhaltenen ersten Komponente werden mit 8,8 g Polyisocyanat 1) homogen vermischt und wie oben beschrieben als Spachtel appliziert.
Folgende Prüfergebnisse wurden ermittelt:
- Spachtelkonsistenz: dünn
- Verziehbarkeit: noch gut verziehbar
Schleifbarkeit: nach 60 Minuten 5
   nach 120 Minuten 5
   nach 180 Minuten 5
   nach 240 Minuten 5
   nach 300 Minuten 5
   nach 24 Stunden 2a-b, weich
- Trocknungszeit: 150 Minuten

Diese Spachtelmasse trocknet langsam und ist selbst nach 24 Stunden Trocknung noch nicht im erforderlichen Maße schleifbar. Sie zeigt außerdem eine insgesamt weniger gute Verarbeitbarkeit.

### Vergleichsbeispiel I)

Die erste Komponente der Spachtelmasse wird gemäß Anwendungsbeispiel A) hergestellt, mit dem Unterschied, dass als Copolymer eine äquivalente Menge Polymer 18) eingesetzt wird, und als variable Zusatzmenge Finntalk® M 40 25 g zugegeben werden. 100 g dieser so erhaltenen ersten Komponente werden mit 8,8 g Polyisocyanat 1) homogen vermischt und wie oben beschrieben als Spachtel appliziert.
Folgende Prüfergebnisse wurden ermittelt:
Spachtelkonsistenz: dünn
- Verziehbarkeit: noch gut verziehbar
- Schleifbarkeit: nach 60 Minuten 5
   nach 120 Minuten 5
   nach 180 Minuten 5
   nach 240 Minuten 4c
   nach 300 Minuten 4a
   nach 24 Stunden 2, etwas weich
- Trocknungszeit: 150 Minuten

Diese Spachtelmasse trocknet langsam und ist selbst nach 24 Stunden Trocknung noch nicht im erforderlichen Maße schleifbar. Sie zeigt außerdem eine weniger gute Verarbeitbarkeit.

Der gleiche Versuch wurde wiederholt, jedoch ohne Polyisocyanat 1), dafür unter Zusatz von 0,1% einer 10%igen Kobaltsikkativlösung zur Beschleunigung der oxidativen Trocknung.

Folgende Prüfergebnisse wurden ermittelt:
- Spachtelkonsistenz: zu dünn
- Verziehbarkeit: schwer verziehbar
- Schleifbarkeit: nach 60 Minuten 5
   nach 120 Minuten 5
   nach 180 Minuten 5
   nach 240 Minuten 3c
   nach 300 Minuten 1a a
   nach 24 Stunden Oa, etwas weich, gute

   Haftung
- Trocknungszeit: 120 Minuten

Diese Spachtelmasse trocknet jetzt schneller, auch die Schleifbarkeit wird etwas schneller erreicht. ist aber immer noch wesentlich schlechter als bei den erfindungsgemäßen Produkten. Außerdem ist die Verarbeitbarkeit insgesamt schlecht. Polymer 18) ist als alleiniges Bindemittel für hochwertige Spachtelmassen nicht geeignet, es kann jedoch in untergeordneten Mengen mitverwendet werden, um Haftungseigenschaften zu verbessern.

### Anwendungsbeispiel J)

In einem Labordissolver wird eine Spachtelmasse aus 100 g Emulsionscopolymerisat 15).

Die so hergestellte erfindungsgemäße wässrige außerordentlich reaktive Spachtelmasse J) wird 10 g einer Wasser/Butylglykol = 1:1 Mischung, 100 g Finntalk® M 40, 150 g Schwerspat EWO (Sacht-leben, Deutschland), 1,3 g Foamaster®TCX, 50 g Mikhart 10, 10 g Titandioxid (Bayertitan R-KB-2, Bayer Deutschland), 1,5 g Aerosil® 200 ( Degussa, Deutschland) und 20 g ZinkphosphatZCP (Korrosionschutzpigment, Heubach, Deutschland) hergestellt.

100 g dieser ersten Komponente werden im Laborrührer mit 3,3 g Polyisocyanat 1) homogen vermischt.bei Raumtemperatur in einer Schichtdicke von ca. 1 mm auf ungeschliffene Karosseriebleche aufgezogen.

Folgende Prüfergebnisse wurden ermittelt:
Spachtelkonsistenz: gut
Verziehbarkeitbarkeit: gut
- Schleifbarkeit: nach 30 Minuten Oa
Pendelhärte: nach 4 Stunden Raumtemperaturtrocknung: 23"
   nach 24 Stunden Raumtemperaturtrocknung: 94"
   nach 2 Stunden Trocknung bei 80°C: 123"
Trocknungszeit: 20 Minuten
- Verarbeitungszeit: 6 Minuten

Die erfindungsgemäße wässrige Spachtelmasse ist in dieser Formulierung außerordentlich reaktiv, sie zeigt sehr schnelle Trocknung, sehr schnelle Schleifbarkeit, hohe Härte und gute Verarbeitbarkeit.

### Anwendungsbeispiel K)

Anwendungsbeispiel J) wird wiederholt, wobei allerdings Emulsionspolymerisat 7) eingesetzt wird und von Polyisocyanat 1 ) 3,3 und von Polyisocyanat 3) 2,1 g verwendet werden.

Die so hergestellte erfindungsgemäße wässrige außerordentlich reaktive Spachtelmasse K) wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz: gut
- Verziehbarkeitbarkeit: gut
Schleifbarkeit: nach 20 Minuten Oa
- Pendelhärte: nach 4 Stunden Raumtemperaturtrocknung: 24"
   nach 24 Stunden Raumtemperaturtrocknung: 103"
   nach 2 Stunden Trocknung bei 80°C: 138"
- Trocknungszeit: 15 Minuten
Verarbeitungszeit: 4 Minuten

Die erfindungsgemäße wässrige Spachtelmasse ist in dieser Formulierung außerordentlich reaktiv, sie zeigt sehr schnelle Trocknung, sehr schnelle Schleifbarkeit, hohe Härte und gute Verarbeitbarkeit.

### Vergleichsbeispiel L)

Gemäß Anwendungsbeispiel J) wird eine Spachtelmasse hergestellt, wobei allerdings auf die Zugabe des Polyisocyanatvernetzers verzichtet wird.

Die so hergestellte wässrige Spachtelmasse L) wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz: gut
- Verziehbarkeitbarkeit: gut
- Schleifbarkeit: Nicht bestimmbar, da die Spachtelmasse sich nach ca. 50 Minuten vom Blech löste.
- Verarbeitungszeit: 20 Minuten

Die wässrige Spachtelmasse ohne Zusatz eines Polyisocyanatvernetzers ist unbrauchbar.

### Anwendungsbeispiel M)

Anwendungsbeispiel J) wird wiederholt, wobei allerdings Emulsionspolymerisat 7) eingesetzt wird und von Polyisocyanat 4) 3,5 g verwendet werden.

Die so hergestellte erfindungsgemäße wässrige außerordentlich reaktive Spachtelmasse wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz: gut
- Verziehbarkeitbarkeit: gut
- Schleifbarkeit: nach 30 Minuten 1a nach 45 Minuten Oa
- Pendelhärte: nach 4 Stunden Raumtemperaturtrocknung: 26"
   nach 24 Stunden Raumtemperaturtrocknung: 33"
   nach 2 Stunden Trocknung bei 80°C: 48"
- Trocknungszeit: 20 Minuten
- Verarbeitungszeit: 4 Minuten

Die erfindungsgemäße wässrige Spachtelmasse ist in dieser Formulierung außerordentlich reaktiv; sie zeigt sehr schnelle Trocknung, schnelle Schleifbarkeit, gute Verarbeitbarkeit. Sie bietet in dieser Formulierung die Möglichkeit sehr gut schleifbare Spachtelmassen, die trotzdem eine relativ niedrige Härte und eine sehr gute Elastizität aufweisen, was z.B. für das Spachteln von Kunststoffen vorteilhaft sein kann.

### Anwendungsbeispiel N)

Die erste Komponente der Spachtelmasse wird gemäß Anwendungsbeispiel A) hergestellt, mit dem Unterschied, dass als Copolymer Emulsionscopolymer 12) eingesetzt wird. 100 g dieser so erhaltenen ersten Komponente werden mit 4,3 g Polyisocyanat 6) homogen vermischt und wie oben beschrieben als Spachtel appliziert.

Folgende Prüfergebnisse wurden ermittelt:
- Spachtelkonsistenz: gut
- Verziehbarkeit: gut verziehbar
- Schleifbarkeit: nach 30 Minuten 4a
   nach 45 Minuten 2a
   nach 60 Minuten Oa
- Haftung: sehr gut
Pendelhärte: nach 4 Stunden Raumtemperaturtrocknung: 15"
   nach 24 Stunden Raumtemperaturtrocknung: 49"
   nach 2 Stunden Trocknung bei 80°C: 115"
Trocknungszeit: 60 Minuten
- Potlife: > 8 Stunden
Verarbeitungszeit: 8 Minuten

Diese erfindungsgemäße Spachtelmasse überzeugt durch gute Verarbeitbarkeit und hohe Härte.

Durch Verwendung des Polyisocyanates 6) wird die gute Schleifbarkeit nicht ganz so schnell erreicht, ist jedoch immer noch sehr gut.

### Vergleichsbeispiel 0)

Die erste Komponente einer Spachtelmasse wird gemäß Anwendungsbeispiel A) hergestellt, mit dem Unterschied, dass als Copolymer das Copolymer aus Vergleichsbeispiel 13) eingesetzt wird.

Es nicht möglich auf diese Art eine stabile erste Komponente einer Spachtelmasse zu erhalten, es erfolgt sofort beim Vermischen bzw. beim Herstellen der ersten Komponenten ein sehr starkes Eindicken. Ein Vermischen mit einer Polyisocyanatkomponente bzw. eine Applikation als Spachtelmasse ist nicht mehr möglich.

### Anwendungsbeispiel P)

Die erste Komponente der Spachtelmasse wird gemäß Anwendungsbeispiel A) hergestellt, mit dem Unterschied, dass als Copolymer Emulsionscopolymer 14) eingesetzt wird, und als variable Zusatzmenge Finntalk M 4040 g zugegeben werden. 100 g dieser so erhaltenen ersten Komponente werden mit 3,93 g Polyisocyanat 1) homogen vermischt und wie oben beschrieben als Spachtel appliziert.
Folgende Prüfergebnisse wurden ermittelt:
Spachtelkonsistenz: gut
- Verziehbarkeit: gut verziehbar
Schleifbarkeit: nach 30 Minuten 3a
   nach 45 Minuten 2a
   nach 60 Minuten 0-1a a
   nach 75 Minuten Oa
Haftung: sehr gut (nach 60 Minuten)
- Pendelhärte: nach 4 Stunden Raumtemperaturtrocknung: 27"
   nach 24 Stunden Raumtemperaturtrocknung: 47"
   nach 2 Stunden Trocknung bei 80°C: 79"
- Trocknungszeit: 60 Minuten
- Verarbeitungszeit: 4 Minuten
- Potlife: > 6 Stunden

Die erfindungsgemäße Spachtelmasse überzeugt durch sehr gute Verarbeitbarkeit und Haftung, sowie guter Schleifbarkeit.

### Anwendungsbeispiel Q)

Die erste Komponente der Spachtelmasse wird gemäß Anwendungsbeispiel A) unter Verwendung von Emulsionscopolymer 7) hergestellt. 100 g dieser so erhaltenen ersten Komponente wird im Laborrührer mit einer Mischung aus 43,1 g Polyiso cyanat 1) und 2,1 g Polyisocyanat 5) homogen vermischt und wie oben beschrieber als Spachtel appliziert.
Folgende Prüfergebnisse wurden ermittelt:
- Spachtelkonsistenz: gut
- Verziehbarkeit: gut
- Schleifbarkeit: nach 30 Minuten 3a
   nach 45 Minuten 2a
   nach 60 Minuten Oa
- Haftung: gut
- Pendelhärte: nach 4 Stunden Raumtemperaturtrocknung: 36"
   nach 24 Stunden Raumtemperaturtrocknung: 128"
   nach 2 Stunden Trocknung bei 80°C: 155"
- Trocknungszeit: 45 Minuten
- Verarbeitungszeit: 8 Minuten

Die erfindungsgemäße wässrige reaktive Spachtelmasse zeigt gute Verarbeitbarkeit, schnelle Schleifbarkeit, gute Haftung und eine sehrschnelle Härteentwicklung sowie eine außergewöhnlich hohe Endhärte.

## Patentansprüche

1. Wässrige reaktive 2-Komponenten-Bindemittelkombinationen für wässrige reaktive Spachtelmassen, bestehend aus
a) mindestens einem, isocyanatreäktive Gruppen enthaltenden Emulsionscopolymerisat, bestehend aus
a1) 50 bis 85 Gew.-% hartmachenden Monomeren, deren Homopolymerisat eine Glasübergangstemperatur von größer 0°C aufweist,
a2) 5 bis 30 Gew.-% weichmachenden Monomeren, deren Homopolymerisat eine Glasübergangstemperatur von kleiner 0°C aufweist,
a3) 2 bis 30 Gew.-% hydroxyfunktionellen Monomeren,
a4) 1 bis 4 Gew.-% carboxyl- und/odercarboxylatfunktionellen Monomeren und
b) mindestens einem, freie Isocyanatgruppen enthaltendem Polyisocyanat mit einer Viskosität von 10 bis 10 000 mPas/23°C und einer Funktionalität von 2,4 bis 5,5. wobei die Summe der %-Zahlen a1) bis a5) 100 beträgt.

2. Wässrige reaktive Spachtelmassen, bestehend aus
a) mindestens einem in wässriger Dispersion bzw. Emulsion vorliegenden Copolymerisat,
b) mindestens einem, freie Isocyanatgruppen enthaltendem Polyisocyanat mit einer Viskosität von 10 bis 20 000 mPas/23°C und einer Funktionalität von 1,5 bis 7,5,
c) mindestens einem Pigment und/oder Füllstoff,
d) gegebenenfalls Hilfs- und Zusatzmittel,
e) gegebenenfalls weiteren in Form wässriger Lösung, Dispersion bzw. Emulsion vorliegenden Oligomeren bzw. Polymeren und
f) gegebenenfalls Wasser und/oder organischem Lösemittel,
wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:1,3 bis 1:20 beträgt.

3. Wässrige reaktive Spachtelmassen gemäß Anspruch 2), bestehend aus
a) 10 bis 50 Gew.-% mindestens eines Emulsionscopolymerisats,
b) 1 bis 15 Gew.-% mindestens eines, freie Isocyanatgruppen enthaltenden Polyisocyanats mit einer Viskosität von 10 bis 20 000 mPas/ 23°C und einer Funktionalität von 2 bis 6,
c) 40 bis 90 Gew.-% mindestens eines Pigment und/oder Füllstoffes,
d) 0 bis 3 Gew.-% Hilfsmittel, Zusatzmittel und/ oder Additive,
e) 0 bis 50 Gew.-% weitere, gegebenenfalls in Form wässriger Lösung, Dispersion bzw. Emulsion vorliegende Oligomere bzw. Polymere und
f) 0 bis 20 Gew.-% Wasser und/oder organische Lösemittel,
wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/ Füllstoff (Feststoff aus Komponente c)) 1:1,5 bis 1: 15 beträgt.

4. Wässrige reaktive Spachtelmassen gemäß Anspruch 2), bestehend aus
a) 10 bis 50 Gew.-% mindestens eines Emulsionscopolymerisats, ein-polymerisiert enthaltend
a1) 35 bis 95 Gew.-% hartmachende Monomere,
a2) 0 bis 50 Gew.-% weichmachende Monomere,
a3) 0 bis 50 Gew.-% hydroxyfunktionelle Monomere,
a4) 0 bis 6 Gew.-% säurefunktionelle Monomere, welche gegebenenfalls anteilig oder ganz in neutralisierter Form vorliegen können,
a5) 0 bis 25 Gew.-% sonstige Monomere und
b) 1 bis 9,8 Gew.-% mindestens eines, freie Isocyanatgruppen enthaltenden Polyisocyanats mit einer Viskosität von 10 bis 20 000 mPas/ 23°C und einer Funktionalität von 2 bis 6,
c) 40 bis 90 Gew.-% mindestens eines Pigment und/oder Füllstoffes,
d) 0 bis 3 Gew.-% Hilfsmittel, Zusatzmittel und/ oder Additive,
e) 0 bis 50 Gew.-% weitere, gegebenenfalls in Form wässriger Lösung, Dispersion bzw. Emulsion vorliegende Oligomere bzw. Polymere und
f) 0 bis 20 Gew.-% Wasser und/oder organische Lösemittel,
wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/ Füllstoff (Feststoff aus Komponente c)) 1:1,5 bis 1: 15 beträgt.

5. Wässrige reaktive Spachtelmassen gemäß Anspruch 2), bestehend aus
a) 10 bis 50 Gew.-% mindestens eines Emulsionscopolymerisats des Molekulargewichtes > 25 000 g/Mol, einpolymerisiert enthaltend
a1) 40 bis 90 Gew.-% hartmachende Monomere,
a2) 0 bis 50 Gew.-% weichmachende Monomere,
a3) 0 bis 40 Gew.-% hydroxyfunktionelle Monomere,
a4) 0,5 bis 5 Gew.-% carboxyl- und/oder carboxylatfunktionelle Monomere,
a5) 0 bis 15 Gew.-% sonstige Monomere und
b) 1 bis 9_{;}8 Gew.-% mindestens eines, freie Isocyanatgruppen enthaltenden Polyisocyanats mit einer Viskosität von 10 bis 20 000 mPas/ 23°C und einer Funktionalität von 2 bis 6,
c) 40 bis 90 Gew.-% mindestens eines Pigment und/oder Füllstoffes,
d) 0 bis 3 Gew.-% Hilfsmittel, Zusatzmittel und/ oder Additive,
e) 0 bis 50 Gew.-% weitere, gegebenenfalls in Form wässriger Lösung, Dispersion bzw. Emulsion vorliegende Oligomere bzw. Polymere und
f) 0 bis 20 Gew.-% Wasser und/oder organische Lösemittel,
wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/ Füllstoff (Feststoff aus Komponente c)) 1:1,5 bis 1: 15 beträgt.

6. Wässrige reaktive Spachtelmassen gemäß Anspruch 2), bestehend aus
a) 10 bis 50 Gew.-% mindestens eines, isocyanatreaktive Gruppen enthaltenden Emulsionscopolymerisats des Molekulargewichtes > 50 000 g/Mol, einpolymerisiert enthaltend
a1) 50 bis 85 Gew.-% hartmachende Monomere,
a2) 5 bis 30 Gew.-% weichmachende Monomere,
a3) 2 bis 30 Gew.-% hydroxyfunktionelle Monomere,
a4) 1 bis 4 Gew.-% carboxyl- und/oder carboxylatfunktionelle Monomere und
b) 1 bis 9,8 Gew.-% mindestens eines, freie Isocyanatgruppen enthaltenden Polyisocyanats mit einer Viskosität von 10 bis 20 000 mPas/ 23°C und einer Funktionalität von 2 bis 6,
c) 40 bis 90 Gew.-% mindestens eines Pigment und/oder Füllstoffes,
d) 0 bis 3 Gew.-% Hilfsmittel, Zusatzmittel und/ oder Additive,
e) 0 bis 50 Gew.-% weitere, gegebenenfalls in Form wässriger Lösung, Dispersion bzw. Emulsion vorliegende Oligomere bzw. Polymere und
f) 0 bis 20 Gew.-% Wasser und/oder organische Lösemittel,
wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/ Füllstoff (Feststoff aus Komponente c)) 1:1,5 bis 1: 15 beträgt.

7. Wässrige reaktive Spachtelmassen gemäß Anspruch 2), bestehend aus
a) 22 bis 38 Gew.-% mindestens eines, isocyanatreaktive Gruppen enthaltenden Emulsionscopolymerisats des Molekulargewichtes > 50 000 g/Mol,
b) 1 bis 7,5 Gew.-% mindestens eines, freie Isocyanatgruppen enthaltenden Polyisocyanats mit einer Viskosität von 10 bis 10 000 mPas/ 23°C und einer Funktionalität von 2,4 bis 5,5,
c) 53 bis 75 Gew.-% mindestens eines Pigment und/oder Füllstoffes,
d) 0 bis 2 Gew.-% Hilfsmittel, Zusatzmittel und/ oder Additive,
e) 0 bis 20 Gew.-% weitere, gegebenenfalls in Form wässriger Lösung, Dispersion bzw. Emulsion vorliegende Oligomere bzw. Polymere und
f) 0 bis 10 Gew.-% Wasser und/oder organische Lösemittel,
wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/ Füllstoff (Feststoff aus Komponente c)) 1:2,1 bis 1: 10 beträgt.

8. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass als Polymer a) ein Emulsionscopolymerisat enthalten ist, das zu mindestens 40 Gew.-% bezogen auf Gesamtfeststoffgehalt des Polymer a) Styrol als einpolymerisiertes Monomer a1) enthält.

9. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass als Polymer
a) ein Emulsionscopolymerisat enthalten ist, bestehend aus einpolymerisierten
a1) 50 bis 85 Gew.- % Styrol, Methylmethacrylat und/oder Butylmethacrylat, wobei mindestens 40 Gew.-% Styrol enthalten sind,
a2) 5 bis 30 Gew.-% n-Butylacrylat, Ethylacrylat und/oder 2- Ethylhexylacrylat,
a3) 2 bis 30 Gew.-% Hydroxypropylmethacrylat, Hydroxyethylmethacrylat, Hydroxypropylacrylat und oder Hydroxyethylacrylat
a4) 1 bis 4 Gew.-% Acrylsäure und/oder Methacrylsäure,
wobei bei Mengen bis 1,5 Gew.-% a4) diese zu mindestens 50 % in neutralisierter Form vorliegen, wobei 1,0 bis 2,0 Gew.-% bezogen auf Gesamtmenge Monomere an Emulgator bzw. Emulgatorgemischen und 0,15 bis 0,45 Gew.-% bezogen auf Gesamtmenge Monomere an Initiator bzw. Initiatorgemischen eingesetzt werden, wobei der Festkörpergehalt bei 30 bis 55 %, die Viskosität 10 bis 5000 mPas/23°C, die Säurezahl 5 bis 30 mg KOH/g bezogen auf 100 % Feststoffgehalt, der Hydroxylgruppengehalt 0,2 bis 3,5 Gew.-% bezogen auf 100 % Feststoffgehalt, und der pH-Wert 5,5 bis 9 beträgt und wobei die Summe der %- Zahlen a1) bis a4) 100 beträgt,

10. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass niedrigviskose hydrophobe Polyisocyanate auf Basis Hexamethylendiisocyanat mit Isocyanurat-, Uretdion-, Allophanat- und/oder Urethanstruktureinheiten und/oder durch Umsetzung mit hydrophilen Polyethern hydroph modifizierte Polyisocyanate auf Basis Hexamethylendiisocyanat als Polyisocyanat b) enthalten sind.

11. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass durch Umsetzung von hydrophilen Polyethern mit aliphatischen und/ odercycloaliphatischen Polyisocyanaten unter Einsatz geeigneter Katalysatoren herstellbare allophanathydrophilierte Polyisocyanate b) enthalten sind.

12. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass als Polyisocyanat b) ein Hexamethylendiisocyanat-Polyisocyanat mit Iminooxadiazindionstruktureinheiten enthalten ist.

13. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass als Polyisocyanat b) Nonantriisocyanat enthalten ist.

14. Wässrige reaktive Spachtelmasse gemäß den Ansprüchen 2) bis 7), dadurch gekennzeichnet, dass Komponente c) zu maximal 10 Gew.-% bezogen auf Gesamtmenge an c) aus anorganischen, farbgebenden Pigmenten besteht.

15. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass das Emulsionscopolymer eine Kern-Schale-Struktur aufweist, der Anteil des Kerns 20 bis 80 Gew.-% beträgt, und die isocyanatreaktiven Monomeren und/oder die weichmachenden Monomeren in Kern bzw. Schale in unterschiedlichen Mengen enthalten sind, wobei die Mengenunterschiede dieser Monomeren in Kern und Schale mindestens 100 % betragen.

16. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass als Komponente e) epoxy- und/oder carbodiimidfunktionelle Oligomere oder Polymere enthalten sind.

17. Verfahren zur Herstellung von wässrigen reaktiven Spachtelmassen gemäß Anspruch 2, dadurch gekennzeichnet, dass zunächst aus mindestens einem als Dispersion bzw. Emulsion vorliegenden Polymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/oder Wasser f) in einem geeigneten technischen Apparat eine Komponente, die mindestens 85 Gew.-% der erfindungsgemäßen Spachtelmasse ausmacht, mit der für eine praxisgerechte Verarbeitung erforderlichen Konsistenz hergestellt wird, und diese dann direkt vor der Anwendung mit der zweiten Komponente, die bis zu 15 Gew.-% der erfindungsgemäßen Spachtelmasse ausmacht, nämlich mindestens einem Polyisocyanatvernetzer b), zu der erfindungsgemäßen wässrigen reaktiven Spachtelmasse homogen vermischt wird.

18. Verfahren zur Herstellung von wässrigen reaktiven Spachtelmassen gemäß Anspruch 2, dadurch gekennzeichnet, dass zunächst aus mindestens einem, isocyanatreaktive Gruppen enthaltenden Emulsionscopolymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/ oder Wasser f) in einem geeigneten technischen Apparat eine Komponente, die 90,2 bis 99 Gew.-% der erfindungsgemäßen Spachtelmasse ausmacht, mit der für eine praxisgerechte Verarbeitung erforderlichen Konsistenz hergestellt wird, und diese dann direkt vor der Anwendung mit der zweiten Komponente, die 9,8 bis 1 Gew.-% der erfindungsgemäßen Spachtelmasse ausmacht, nämlich mindestens einem Polyisocyanatvernetzer b), zu der erfindungsgemäßen wässrigen reaktiven Spachtelmasse homogen vermischt wird.

19. Verfahren zur Herstellung von wässrigen reaktiven Spachtelmassen gemäß Anspruch 2, dadurch gekennzeichnet, dass zunächst aus mindestens einem als Dispersion bzw. Emulsion vorliegenden Polymer a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) gegebenenfalls bis zu 10 Gew.-% bezogen auf Gesamtfeststoffgehalt organischem Lösemittel und/oder Wasser f) und mindestens einem Polyisocyanatvernetzer b) die erfindungsgemäße Spachtelmasse in einem geeigneten technischen Apparat, unmittelbar vor der Anwendung der wässrigen reaktiven Spachtelmasse, hergestellt wird, und diese dann gegebenenfalls durch Zugabe von Wasser und/oder organischem Lösemittel auf die erforderliche Verarbeitungskonsistenz eingestellt wird.

20. Wässrige reaktive 2-Komponenten-Bindemittelkombinationen für wässrige reaktive Spachtelmassen gemäß Anspruch 1) und wässrige reaktive Spachtelmassen gemäß den Ansprüchen 2) bis 7), dadurch gekennzeichnet, dass sie durch Verwendung lichtechter Komponenten a) und b) unter den für Spachtelmassen üblichen Anwendungsbedingungen zu lichtechten, verfärbungsund abbaustabilen Spachtelmassen aushärten.

21. Wässrige reaktive Spachtelmassen gemäß den Ansprüchen 2) bis 7), dadurch gekennzeichnet, das weniger als 5 Gew.-% flüchtiger organischer Substanzen enthalten sind.

22. Verwendung wässriger reaktiver 2-Komponenten-Bindemittelkombinationen gemäß Anspruch 1) in oder als wässrige reaktive Spachtelmassen für Holz, holzartige Untergründe und/oder Kork.

23. Verwendung wässriger reaktiver 2-Komponenten-Bindemittelkombinationen gemäß Anspruch 1) in oder als wässrige reaktive Spachtelmassen für metallische Untergründe, Fahrzeugkarosserien und/ oder Kunststoffe.

24. Verwendung wässriger reaktiver 2-Komponenten-Bindemittelkombinationen gemäß Anspruch 1) in oder als wässrige reaktive Spachtelmassen für Marmor, Granit bzw. mineralische Untergründe.

25. Verwendung wässriger reaktiver 2-Komponenten-Bindemittelkombinationen gemäß Anspruch 1) in oder zur Herstellung von glasfaserverstärkten Kunststoffen, glasfaserverstärkten Flächengebilden oder Gießharzen.

## Claims

1. Aqueous reactive 2-component binder combinations for aqueous reactive filling compounds, composed of
a) at least one emulsion copolymer containing isocyanate-reactive groups and composed of
a1) from 50 to 85% by weight of hardening monomers whose homopolymer has a glass transition temperature of more than 0°C,
a2) from 5 to 30% by weight of softening monomers whose homopolymer has a glass transition temperature of less than 0°C,
a3) from 2 to 30% by weight of hydroxyfunctional monomers,
a4) from 1 to 4% by weight of carboxyl- and/or carboxylate-functional monomers, and
b) at least one polyisocyanate containing free isocyanate groups and having a viscosity of from 10 to 10,000 mPas/23°C and a functionality of from 2.4 to 5.5, the sum of the percentages a1) to a4) being 100.

2. Aqueous reactive filling compounds composed of
a) at least one copolymer in aqueous dispersion or emulsion,
b) at least one polyisocyanate containing free isocyanate groups and having a viscosity of from 10 to 20,000 mPas/23°C and a functionality of from 1.5 to 7.5,
c) at least one pigment and/or filler,
d) optionally auxiliaries and additives,
e) optionally further oligomers and/or polymers in aqueous solution, dispersion and/or emulsion form, and
f) optionally water and/or organic solvent,
the weight ratio of resin (solids from component a), from component b) and
optionally from component e)) to pigment/filler (solids from component c)) being from 1:1.3 to 1:20.

3. Aqueous reactive filling compounds according to Claim 2, composed of
a) from 10 to 50% by weight of at least one emulsion copolymer,
b) from 1 to 15% by weight of at least one polyisocyanate containing free isocyanate groups and having a viscosity of from 10 to 20,000 mPas/23°C and a functionality of from 2 to 6,
c) from 40 to 90% by weight of at least one pigment and/or filler,
d) from 0 to 3% by weight of auxiliaries, additives and/or adjuvants,
e) from 0 to 50% by weight of further oligomers and/or polymers optionally in aqueous solution, dispersion and/or emulsion form, and
f) from 0 to 20% by weight of water and/or organic solvents,
the sum of a) to f) being 100% by weight and the weight ratio of resin (solids from component a), from component b) and optionally from component e)) to pigment/filler (solids from component c)) being from 1:1.5to 1:15.

4. Aqueous reactive filling compounds according to Claim 2, composed of
a) from 10 to 50% by weight of at least one emulsion copolymer containing in copolymerized form
a1) from 35 to 95% by weight of hardening monomers,
a2) from 0 to 50% by weight of softening monomers,
a3) from 0 to 50% by weight of hydroxyfunctional monomers,
a4) from 0 to 6% by weight of acid-functional monomers, which may optionally be present proportionally or entirely in neutralized form,
a5) from 0 to 25% by weight of other monomers, and
b) from 1 to 9.8% by weight of at least one polyisocyanate containing free isocyanate groups and having a viscosity of from 10 to 20,000 mPas/23°C and a functionality of from 2 to 6,
c) from 40 to 90% by weight of at least one pigment and/or filler,
d) from 0 to 3% by weight of auxiliaries, additives and/or adjuvants,
e) from 0 to 50% by weight of further oligomers and/or polymers optionally in aqueous solution, dispersion and/or emulsion form, and
f) from 0 to 20% by weight of water and/or organic solvents,
the sum of a) to f) being 100% by weight and the weight ratio of resin (solids from component
a), from component b) and optionally from component e)) to pigment/filler (solids from component c)) being from 1:1.5 to 1:15.

5. Aqueous reactive filling compounds according to Claim 2, composed of
a) from 10 to 50% by weight of at least one emulsion copolymer of molecular weight > 25,000 g/mol, containing in copolymerized form
a1) from 40 to 90% by weight of hardening monomers,
a2) from 0 to 50% by weight of softening monomers,
a3) from 0 to 40% by weight of hydroxy- functianal monomers,
a4) from 0.5 to 5% by weight of carboxyl- and/or carboxylate-functional monomers,
a5) from 0 to 15% by weight of other monomers, and
b) from 1 to 9.8% by weight of at least one polyisocyanate containing free isocyanate groups and having a viscosity of from 10 to 20,000 mPas/23°C and a functionality of from 2 to 6,
c) from 40 to 90% by weight of at least one pigment and/or filler,
d) from 0 to 3% by weight of auxiliaries, additives and/or adjuvants,
e) from 0 to 50% by weight of further oligomers and/or polymers optionally in aqueous solution, dispersion and/or emulsion form, and
f) from 0 to 20% by weight of water and/or organic solvents,
the sum of a) to f) being 100% by weight and the weight ratio of resin (solids from component
a), from component b) and optionally from component e)) to pigment/filler (solids from component c)) being from 1:1.5 to 1:15.

6. Aqueous reactive filling compounds according to Claim 2, composed of
a) from 10 to 50% by weight of at least one emulsion copolymer of molecular weight > 50,000 g/mol, containing isocyanate-reactive groups and containing in copolymerized form
a1) from 50 to 85% by weight of hardening monomers,
a2) from 5 to 30% by weight of softening monomers,
a3) from 2 to 30% by weight of hydroxyfunctional monomers,
a4) from 1 to 4% by weight of carboxyl- and/or carboxylatefunctional monomers,
b) from 1 to 9.8% by weight of at least one polyisocyanate containing free isocyanate groups and having a viscosity of from 10 to 20,000 mPas/23°C and a functionality of from 2 to 6,
c) from 40 to 90% by weight of at least one pigment and/or filler,
d) from 0 to 3% by weight of auxiliaries, additives and/or adjuvants,
e) from 0 to 50% by weight of further oligomers and/or polymers optionally in aqueous solution, dispersion and/or emulsion form, and
f) from 0 to 20% by weight of water and/or organic solvents,
the sum of a) to f) being 100% by weight and the weight ratio of resin (solids from component
a), from component b) and optionally from component e)) to pigment/filler (solids from component c)) being from 1:1.5 to 1:15.

7. Aqueous reactive filling compounds according to Claim 2, composed of
a) from 22 to 38% by weight of at least one emulsion copolymer of molecular weight > 50,000 g/mol, containing isocyanate-reactive groups,
b) from 1 to 7.5% by weight of at least one polyisocyanate containing free isocyanate groups and having a viscosity of from 10 to 10,000 mPas/23°C and a functionality of from 2.4 to 5.5,
c) from 53 to 75% by weight of at least one pigment and/or filler,
d) from 0 to 2% by weight of auxiliaries, additives and/or adjuvants,
e) from 0 to 20% by weight of further oligomers and/or polymers optionally in aqueous solution, dispersion and/or emulsion form, and
f) from 0 to 10% by weight of water and/or organic solvents,
the sum of a) to f) being 100% by weight and the weight ratio of resin (solids from component
a), from component b) and optionally from component e)) to pigment/filler (solids from component c)) being from 1:2.1 to 1:10.

8. Aqueous reactive 2-component binder combinations for aqueous reactive filling compounds according to Claim 1, and aqueous reactive filling compounds according to Claims 2 to 7, characterized in that as polymer a) an emulsion copolymer is present containing at least 40% by weight, based on total solids content of the polymer a) styrene as copolymerized monomer a1).

9. Aqueous reactive 2-component binder combinations for aqueous reactive filling compounds according to Claim 1, and aqueous reactive filling compounds according to Claims 2 to 7, characterized in that as polymer
a) an emulsion copolymer is present composed of the following in copolymerized form
a1) from 50 to 85% by weight of styrene, methyl methacrylate and/or butyl methacrylate, including at least 40% by weight of styrene,
a2) from 5 to 30% by weight of n-butyl acrylate, ethyl acrylate and/or 2-ethylhexyl acrylate,
a3) from 2 to 30% by weight of hydroxypropyl methacrylate, hydroxyethyl methacrylate, hydroxypropyl acrylate and/or hydroxyethyl acrylate, and
a4) from 1 to 4% by weight of acrylic acid and/or methacrylic acid,
a4), when present in amounts of up to 1.5% by weight, being at least 50% in neutralized form, using from 1.0 to 2.0% by weight, based on total amount of monomers of emulsifier or emulsifier mixtures and from 0.15 to 0.45% by weight, based on the total amount of monomers of initiator or initiator mixtures, the solids content being from 30 to 55%, the viscosity from 10 to 5,000 mPas/23°C, the acid numberfrom 5 to 30 mg KOH/g based on 100% solids content, the hydroxyl group content from 0.2 to 3.5% by weight based on 100% solids content, and the pH from 5.5to 9, and the sum of the percentages of a1) to a4) being 100.

10. Aqueous reactive 2-component binder combinations for aqueous reactive filling compounds according to Claim 1, and aqueous reactive filling compounds according to Claims 2 to 7, characterized in that low-viscosity hydrophobic polyisocyanates based on hexamethylene diisocyanate with isocyanurate, uretdione, allophanate and/or urethane structural units and/or hexamethylene diisocyanate-based polyisocyanates modified hy- drophilically by reaction with hydrophilic polyethers are present as polyisocyanate b).

11. Aqueous reactive 2-component binder combinations for aqueous reactive filling compounds according to Claim 1, and aqueous reactive filling compounds according to Claims 2 to 7, characterized in that allophanate-hydrophilicized polyisocyanates b) preparable by reacting hydrophilic polyethers with aliphatic and/or cycloaliphatic polyisocyanates using appropriate catalysts are present.

12. Aqueous reactive 2-component binder combinations for aqueous reactive filling compounds according to Claim 1, and aqueous reactive filling compounds according to Claims 2 to 7, characterized in that as polyisocyanate b) a hexamethylene diisocyanate polyisocyanate having iminooxadiazinedione structural units is present.

13. Aqueous reactive 2-component binder combinations for aqueous reactive filling compounds according to Claim 1, and aqueous reactive filling compounds according to Claims 2 to 7, characterized in that as polyisocyanate b) a nonane triisocyanate is present.

14. Aqueous reactive filling compound according to Claims 2 to 7, characterized in that not more than 10% by weight of component c), based on total amount of c), is composed of inorganic colouring pigments.

15. Aqueous reactive 2-component binder combinations for aqueous reactive filling compounds according to Claim 1, and aqueous reactive filling compounds according to Claims 2 to 7, characterized in that the emulsion copolymer has a core/ shell structure, the fraction of the core is from 20 to 80% by weight, and the isocyanate-reactive monomers and/orthe softening monomers are present in different amounts in the core and shell respectively, the quantitative differences between these monomers in core and shell being at least 100%.

16. Aqueous reactive 2-component binder combinations for aqueous reactive filling compounds according to Claim 1, and aqueous reactive filling compounds according to Claims 2 to 7, characterized in that as component e) epoxy- and/or carbodiimide-functional oligomers or polymers are present.

17. Process for preparing aqueous reactive filling compounds according to Claim 2, characterized in that first of all a component is prepared from at least one polymer a) present in dispersion and/or emulsion form with pigment or pigment mixtures, fillers orfiller mixtures c), optionally adjuvants, auxiliaries and/or additives d), optionally further oligomers and/or polymers e) optionally in aqueous solution, dispersion and/or emulsion form, and optionally up to 20% by weight, based on total solids content, of organic solvent and/or water f), in a suitable technical apparatus, this component making up at least 85% by weight of the filling compound and having the consistency required for its practical processing, and this component is then mixed homogeneously, immediately prior to use, with the second component, which makes up up to 15% by weight of the filling compound, namely at least one polyisocyanate crosslinker b), to give the aqueous reactive filling compound.

18. Process for preparing aqueous reactive filling compounds according to Claim 2, characterized in that first of all a component is prepared from at least one emulsion copolymer a) containing isocyanate-reactive groups with pigment or pigment mixtures, fillers or filler mixtures c), optionally adjuvants, auxiliaries and/or additives d), optionally further oligomers and/or polymers e) optionally in aqueous solution, dispersion and/or emulsion form, and optionally up to 20% by weight, based on total solids content, of organic solvent and/or waterf), in a suitable technical apparatus, this component making up from 90.2 to 99% by weight of thefilling compound and having the consistency required for its practical processing, and this component is then mixed homogeneously, immediately prior to use, with the second component, which makes up from 9.8 to 1% by weight of the filling compound, namely at least one polyisocyanate crosslinker b), to give the aqueous reactive filling compound.

19. Process for preparing aqueous reactive filling compounds according to Claim 2, characterized in that first of all the filling compound is prepared from at least one polymer a) present in dispersion and/or emulsion form with pigment or pigment mixtures, fillers or filler mixtures c), optionally adjuvants, auxiliaries and/or additives d), optionally further oligomers and/or polymers e) optionally in aqueous solution, dispersion and/or emulsion form, and optionally up to 10% by weight, based on total solids content, of organic solvent and/or water f) and at least one polyisocyanate crosslinker b), in a suitable technical apparatus, immediately prior to the application of the aqueous reactive filling compound, and this compound is then optionally adjusted to the required processing consistency by adding water and/or organic solvent.

20. Aqueous reactive 2-component binder combinations for aqueous reactive filling compounds according to Claim 1, and aqueous reactive filling compounds according to Claims 2 to 7, characterized in that through the use of lightfast components a) and b) they cure under the normal application conditions for filling compounds to give lightfast, discoloration-stable and degradation-stable filler compounds.

21. Aqueous reactive filling compounds according to Claims 2 to 7, characterized in that less than 5% by weight of volatile organic substances are present.

22. Use of aqueous reactive 2-component binder combinations according to Claim 1 in or as aqueous reactive filling compounds for wood, woodlike substrates and/or cork.

23. Use of aqueous reactive 2-component binder combinations according to Claim 1 in or as aqueous reactive filling compounds for metallic substrates, vehicles bodies and/or plastics.

24. Use of aqueous reactive 2-component binder combinations according to Claim 1 in or as aqueous reactive filling compounds for marble, granite and/or mineral substrates.

25. Use of aqueous reactive 2-component binder combinations according to Claim 1 in or for producing glass-fibre-reinforced plastics, glass-fibre-reinforced sheet structures or casting resins.

## Revendications

1. Combinaisons réactives aqueuses de liant à deux composants pour mastics aqueux réactifs, consistant en :
a) au moins un copolymère en émulsion, contenant des radicaux réactifs avec les isocyanates, consistant en :
a1) 50 à 85% en poids de monomères durcisseurs, dont l'homopolymère présente une température de transition vitreuse supérieure à 0°C,
a2) 5 à 30% en poids de monomères plastifiants, dont l'homopolymère présente une température de transition vitreuse inférieure à 0°C,
a3) 2 à 30% en poids de monomères à fonction hydroxyle,
a4) 1 à 4% en poids de monomères à fonction carboxyle et/ou carboxylate, et
b) au moins un polyisocyanate contenant des radicaux isocyanate libres, avec une viscosité allant de 10 à 10 000 mPa.s/23°C et une fonctionnalité allant de 2,4 à 5,5, où la somme des pourcentages al à a4) s'élève à 100%.

2. Mastics aqueux réactifs consistant en :
a) au moins un copolymère présent dans une dispersion ou émulsion aqueuse,
b) au moins un polyisocyanate contenant des radicaux isocyanate libres, avec une viscosité allant de 10 à 20 000 mPa.s/23°C et une fonctionnalité allant de 1,5 à 7,5,
c) au moins un pigment et/ou charge,
d) le cas échéant, des auxiliaires et additifs,
e) le cas échéant, d'autres oligomères ou polymères présents sous forme de solution, dispersion ou émulsion aqueuse, et
f) le cas échéant de l'eau et/ou un solvant organique,
où le rapport pondéral de résine (solide du composant a), du composant b) et le cas échéant, du composant e)) au pigment/charge (solide du composant c)) se situe dans l'intervalle allant de 1: 1,3 à 1:20.

3. Mastics aqueux réactifs suivant la revendication 2, consistant en :
a) 10 à 50% en poids d'au moins un copolymère en émulsion,
b) 1 à 15% en poids d'au moins un polyisocyanate contenant des radicaux isocyanate libres, avec une viscosité allant de 10 à 20 000 mPa. s/23°C et une fonctionnalité allant de 2 à 6,
c) 40 à 90% en poids d'au moins un pigment et/ ou charge,
d) 0 à 3% en poids d'auxiliaire, adjuvant et/ou additif,
e) 0 à 50% en poids d'autres oligomères ou polymères présents sous forme de solution, dispersion ou émulsion aqueuse, et
f) 0 à 20% en poids d'eau et/ou de solvant organique,
où la somme de a) à f) se situe à 100% et où le rapport pondéral de résine (solide du composant a), du composant b) et le cas échéant, du composant e)) au pigment/charge (solide du composant c)) se situe dans l'intervalle allant de 1:1,5 à 1:15.

4. Mastics aqueux réactifs suivant la revendication 2, consistant en :
a) 10 à 50% en poids d'au moins un copolymère en émulsion, obtenu par polymérisation de :
al ) 35 à 95% en poids de monomères durcisseurs,
a2) 0 à 50% en poids de monomères plastifiants,
a3) 0 à 50% en poids de monomères à fonction hydroxyle,
a4) 0 à 6% en poids de monomères à fonction acide, qui peuvent être le cas échéant présents, sous forme partiellement ou complètement neutralisée,
a5) 0 à 25% en poids d'autres monomères, et
b) 1 à 9,8% en poids d'au moins un polyisocyanate contenant des radicaux isocyanate libres, avec une viscosité allant de 10 à 20 000 mPa. s/23°C et une fonctionnalité allant de 2 à 6,
c) 40 à 90% en poids d'au moins un pigment et/ ou charge,
d) 0 à 3% en poids d'auxiliaire, adjuvant et/ou additif,
e) 0 à 50% en poids d'autres oligomères ou polymères présents sous forme de solution, dispersion ou émulsion aqueuse, et
f) 0 à 20% en poids d'eau et/ou de solvant organique,
où la somme de a) à f) se situé à 100% et où le rapport pondéral de résine (solide du composant a), du composant b) et le cas échéant, du composant e)) au pigment/charge (solide du composant c)) se situe dans l'intervalle allant de 1:1,5 à 1:15.

5. Mastics aqueux réactifs suivant la revendication 2, consistant en :
a) 10 à 50% en poids d'au moins un copolymère en émulsion, de poids moléculaire > 25 000 g/ mole, obtenu par polymérisation de :
a1) 40 à 90% en poids de monomères durcisseurs,
a2) 0 à 50% en poids de monomères plastifiants,
a3) 0 à 40% en poids de monomères à fonction hydroxyle,
a4) 0,5 à 5% en poids de monomères à fonction carboxyle et/ou carboxylate, a5) 0 à 15% en poids d'autres monomères, et
b) 1 à 9,8% en poids d'au moins un polyisocyanate contenant des radicaux isocyanate libres, avec une viscosité allant de 10 à 20 000 mPa. s/23°C et une fonctionnalité allant de 2 à 6,
c) 40 à 90% en poids d'au moins un pigment et/ ou charge,
d) 0 à 3% en poids d'auxiliaire, adjuvant et/ou additif,
e) 0 à 50% en poids d'autres oligomères ou polymères présents sous forme de solution, dispersion ou émulsion aqueuse, et
f) 0 à 20% en poids d'eau et/ou de solvant organique,
où la somme de a) à f) se situe à 100% et où le rapport pondéral de résine (solide du composant a), du composant b) et le cas échéant, du composant e)) au pigment/charge (solide du composant c)) se situe dans l'intervalle allant de 1:1,5 à 1:15.

6. Mastics aqueux réactifs suivant la revendication 2, consistant en :
a) 10 à 50% en poids d'au moins un copolymère en émulsion, contenant des radicaux réactifs avec les isocyanates, de poids moléculaire > 50 000 g/mole, obtenu par polymérisation de :
a1) 50 à 85% en poids de monomères durcisseurs,
a2) 5 à 30% en poids de monomères plastifiants,
a3) 2 à 30% en poids de monomères à fonction hydroxyle,
a4) 1 à 4% en poids de monomères à fonction carboxyle et/ou carboxylate, et
b) 1 à 9,8% en poids d'au moins un polyisocyanate contenant des radicaux isocyanate libres, avec une viscosité allant de 10 à 20 000 mPa. s/23°C et une fonctionnalité allant de 2 à 6,
c) 40 à 90% en poids d'au moins un pigment et/ ou charge,
d) 0 à 3% en poids d'auxiliaire, adjuvant et/ou additif,
e) 0 à 50% en poids d'autres oligomères ou polymères présents sous forme de solution, dispersion ou émulsion aqueuse, et
f) 0 à 20% en poids d'eau et/ou de solvant organique,
où la somme de a) à f) se situe à 100% et où le rapport pondéral de résine (solide du composant a), du composant b) et le cas échéant, du composant e)) au pigment/charge (solide du composant c)) se situe dans l'intervalle allant de 1:1,5 à 1:15.

7. Mastics aqueux réactifs suivant la revendication 2, consistant en :
a) 22 à 38% en poids d'au moins un copolymère en émulsion, contenant des radicaux réactifs avec les isocyanates, de poids moléculaire > 50 000 g/mole,
b) 1 à 7,5% en poids d'au moins un polyisocyanate contenant des radicaux isocyanate libres, avec une viscosité allant de 10 à 10 000 mPa. s/23°C et une fonctionnalité allant de 2,4 à 5,5,
c) 53 à 75% en poids d'au moins un pigment et/ ou charge,
d) 0 à 2% en poids d'auxiliaire, adjuvant et/ou additif,
e) 0 à 20% en poids d'autres oligomères ou polymères le cas échéant présents sous forme de solution, dispersion ou émulsion aqueuse, et
f) 0 à 10% en poids d'eau et/ou de solvant organique,
où la somme de a) à f) se situe à 100% et où le rapport pondéral de résine (solide du composant a), du composant b) et le cas échéant, du composant e)) au pigment/charge (solide du composant c)) se situe dans l'intervalle allant de 1:2,1 à 1:10.

8. Combinaisons réactives aqueuses de liant à deux composants pour mastics aqueux réactifs suivant la revendication 1, et mastics aqueux réactifs suivant les revendications 2 à 7, caractérisés en ce qu'un copolymère en émulsion est présent comme polymère a), lequel contient au moins 40% en poids, sur base de la teneurtotale en matière solide du polymère a), de styrène comme monomère a1) incorporé.

9. Combinaisons réactives aqueuses de liant à deux composants pour mastics aqueux réactifs suivant la revendication 1. et mastics aqueux réactifs suivant les revendications 2 à 7, caractérisés en ce que comme polymère,
a) un copolymère en émulsion est présent, lequel consiste en, polymérisés,
ai) 50 à 85% en poids de styrène, méthacrylate de méthyle et/ou méthacrylate de butyle, où au moins 40% en poids de styrène sont présents,
a2) 5 à 30% en poids d'acrylate de n-butyle, d'acrylate d'éthyle et/ou d'acrylate de 2-éthylhexyle,
a3) 2 à 30% en poids de méthacrylate d'hy- droxypropyle, de méthacrylate d'hydroxyé- thyle, d'acrylate d'hydroxypropyle et/ou d'acrylate d'hydroxyéthyle,
a4) 1 à 4% en poids d'acide acrylique et/ ou d'acide méthacrylique,
où pour des quantités de jusqu'à 1 ,5% en poids de a4), celui-ci est présent pour au moins 50% sous forme neutralisée,
où on met en oeuvre 1,0 à 2,0% en poids sur base de la quantité totale des monomères, d'émulsionnant ou mélange d'émulsionnants et 0,15 à 0,45% en poids sur base de la quantité totale des monomères, d'initiateur ou de mélange d'initiateurs, où la teneur en matière solide se situe dans l'intervalle allant de 30 à 55%, la viscosité dans l'intervalle allant de 10 à 5000 mPa.s/23°C, l'indice d'acide de 5 à 30 mg KOH/ g sur base de 100% de matière solide, la teneur en radicaux hydroxyle dans l'intervalle allant de 0,2 à 3,5% en poids sur base de 100% de matière solide, et le pH dans l'intervalle allant de 5,5 à 9 et où la somme des pourcentages de a1) à a4) se situe à 100.

10. Combinaisons réactives aqueuses de liant à deux composants pour mastics aqueux réactifs suivant la revendication 1, et mastics aqueux réactifs suivant les revendications 2 à 7, caractérisés en ce que sont présents comme polyisocyanate b), des polyisocyanates hydrophobes faiblement visqueux à base d'hexaméthylènediisocyanate avec des unités isocyanurate, uretdione, allophanate et/ou uréthanne et/ou de polyisocyanates modifiés hydrophiles par réaction avec des polyéthers hydrophiles, à base d'hexaméthylènediisocyanate.

11. Combinaisons réactives aqueuses de liant à deux composants pour mastics aqueux réactifs suivant la revendication 1, et mastics aqueux réactifs suivant les revendications 2 à 7, caractérisés en ce que sont présents des polyisocyanates b) rendus hydrophiles par des radicaux allophanate, pouvant être préparés par réaction de polyéthers hydrophiles avec des polyisocyanates aliphatiques et/ou cy- cloaliphatiques avec mise en oeuvre de catalyseurs appropriés.

12. Combinaisons réactives aqueuses de liant à deux composants pour mastics aqueux réactifs suivant la revendication 1, et mastics aqueux réactifs suivant les revendications 2 à 7, caractérisés en ce que comme polyisocyanate b), est présent un polyisocyanate d'hexaméthylènediisocyanate avec des unités structurelles iminooxadiazinedione.

13. Combinaisons réactives aqueuses de liant à deux composants pour mastics aqueux réactifs suivant la revendication 1, et mastics aqueux réactifs suivant les revendications 2 à 7, caractérisés en ce que comme polyisocyanate b), est présent le nona- netriisocyanate.

14. Mastics aqueux réactifs suivant les revendications 2 à 7, caractérisés en ce que le composant c) consiste en maximum 10% en poids, sur base de la quantité totale de c), de pigments inorganiques colorants.

15. Combinaisons réactives aqueuses de liant à deux composants pour mastics aqueux réactifs suivant la revendication 1, et mastics aqueux réactifs suivant les revendications 2 à 7, caractérisés en ce que le copolymère en émulsion présente une structure coeur-coque, dont la quantité de coeurse situe dans l'intervalle allant de 20 à 80% en poids et les monomères réactifs avec les isocyanates et/ou les monomères plastifiants sont présents dans le coeur ou la coque en des quantités différentes, où la différence de quantité de ces monomères dans le coeur et la coque s'élève à au moins 100%.

16. Combinaisons réactives aqueuses de liant à deux composants pour mastics aqueux réactifs suivant la revendication 1, et mastics aqueux réactifs suivant les revendications 2 à 7, caractérisés en ce que comme composant e), sont présents des oligomères ou polymères à fonction époxy et/ou car- bodiimide.

17. Procédé de préparation de mastics aqueux réactifs suivant la revendication 2, caractérisé en ce que l'on prépare d'abord à partir d'au moins un polymère a) présent sous la forme d'une dispersion ou émulsion, avec le pigment et/ou mélange de pigments, de la charge ou du mélange de charges c), le cas échéant d'additifs, auxiliaires ou adjuvants d), lecas échéant d'autres oligomères ou polymères le cas échéant sous forme de solution, dispersion ou émulsion aqueuse e), et le cas échéantjusqu'à20% en poids sur base de la teneur totale en matière solide, de solvant organique et/ou d'eau f), dans un appareil technique approprié, un composant qui compose au moins 85% en poids du mastic suivant l'invention, ayant la consistance nécessaire pour un traitement pratique, et celui-ci est mélangé de manière homogène, directement avant l'utilisation, avec le deuxième composant, qui compose jusqu'à 15% en poids du mastic suivant l'invention, à savoir d'au moins un réticulant polyisocyanate b), en le mastic réactif aqueux suivant l'invention.

18. Procédé de préparation de mastics réactifs aqueux suivant la revendication 2, caractérisé en ce que l'on prépare d'abord à partir d'au moins un copolymère en émulsion a), contenant des radicaux réactifs avec les isocyanates, avec le pigment et/ou mélange de pigments, la charge ou le mélange de charges c), le cas échéant les additifs, auxiliaires ou adjuvants d), le cas échéant d'autres oligomères ou polymères le cas échéant sous forme de solution, dispersion ou émulsion aqueuse e), et le cas échéant jusqu'à 20% en poids sur base de lateneur totale en matière solide, de solvant organique et/ou d'eau f), dans un appareil technique approprié, un composant qui compose 90,2 à 99% en poids du mastic suivant l'invention, ayant la consistance nécessaire pour un traitement pratique, et celui-ci est mélangé de manière homogène, directement avant l'utilisation, avec le deuxième composant, qui compose 9,8 à 1% en poids du mastic suivant l'invention, à savoir d'au moins un réticulant polyisocyanate b), en le mastic réactif aqueux suivant l'invention.

19. Procédé de préparation de mastics réactifs aqueux suivant la revendication 2, caractérisé en ce que l'on prépare d'abord à partird'au moins un polymère a), présent comme une dispersion ou une émulsion, avec le pigment et/ou mélange de pigments, la charge ou le mélange de charges c), le cas échéant les additifs, auxiliaires ou adjuvants d), le cas échéant d'autres oligomères ou polymères le cas échéant sous forme de solution, dispersion ou émulsion aqueuse e), et le cas échéant jusqu'à 10% en poids sur base de la teneur totale en matière solide, de solvant organique et/ou d'eau f) et au moins un réticulant polyisocyanate b), dans un appareil technique approprié, le mastic suivant l'invention, directement avant l'utilisation du mastic aqueux réactif, et celui-ci est ajusté le cas échéant, à la consistance nécessaire au traitement par addition d'eau et/ou d'un solvant organique.

20. Combinaisons réactives aqueuses de liant à deux composants pour mastics aqueux réactifs suivant la revendication 1, et mastics aqueux réactifs suivant les revendications 2 à 7, caractérisés en ce qu'ils durcissent par utilisation de composants a) et b) stables à la lumière dans les conditions d'utilisation usuelles pour les mastics, en des mastics stables à la lumière, stables à la coloration et à la dégradation.

21. Mastics aqueux réactifs suivant les revendications 2 à 7, caractérisés en ce que moins de 5% en poids de substances organiques volatiles sont présentes.

22. Utilisation de combinaisons réactives aqueuses de liant à deux composants suivant la revendication 1, dans ou comme mastics aqueux réactifs pour le bois, des substrats ligneux et/ou le liège.

23. Utilisation de combinaisons réactives aqueuses de liant à deux composants suivant la revendication 1, dans ou comme mastics aqueux réactifs pour des substrats métalliques, des carrosseries de véhicules automobiles et/ou des matières plastiques.

24. Utilisation de combinaisons réactives aqueuses de liant à deux composants suivant la revendication 1, dans ou comme mastics aqueux réactifs pour le marbre, le granit ou des substrats minéraux.

25. Utilisation de combinaisons réactives aqueuses de liant à deux composants suivant la revendication 1, dans ou pour la préparation de matières plastiques renforcées par fibres de verre, structures planes ou résines coulées renforcées par fibres de verre.
